# EUROPEAN PATENT SPECIFICATION

(11) **EP 1 332 627 B1**
(45) Date of publication and mention of the grant of the patent: **10.10.2007**
(21) Application number: 01981281.7
(22) Date of filing: 06.11.2001
(51) Int. Cl.: H04Q 7/00, H04L 12/14, H04M 15/00, H04L 29/06

(54) **METHOD AND APPARATUS FOR COORDINATED CHARGING OF SERVICES IN A MULTIMEDIA SESSION**
VERFAHREN UND GERÄT FÜR DIE KOORDINIERTE VERRECHNUNG VON DIENSTEN IN EINEM MULTIMEDIA SITZUNG
PROCEDE ET APPAREIL PERMETTANT DE COORDONNER LA TAXATION DE SERVICES FOURNIS DANS UNE SESSION MULTIMEDIA

(30) Priority: 06.11.2000 US 246501 P; 22.06.2001 GB 0115340; 23.10.2001 US 330501 P; 05.11.2001 US 985633
(43) Date of publication of application: 06.08.2003
(73) Proprietor: TELEFONAKTIEBOLAGET LM ERICSSON (publ), 164 83 Stockholm (SE)
(72) Inventor: LUNDSTRÖM, Johan, Edvin, Gunnar, FIN-21600 Pargas (FI); OLSSON, Patrik, S-217 72 Malmö (SE); OYAMA, Johnson, c/o Robertsson, S- 169 68 Solna (SE); WIDEGREN, Ina, Birgitta, S-117 31 Stockholm (SE)
(74) Representative: Norin, Klas
(86) International application number: PCT/SE2001/002451
(87) International publication number: WO 2002/037870

(56) References cited:
- EP-A- 1 014 619
- WO-A-00/10357
- WO-A-00/24161
- WO-A-97/26739
- WO-A-99/16266
- WO-A-99/17497
- WO-A-99/48310
- US-A- 5 943 320

## Description

### CROSS-REFERENCE TO RELATED APPLICATIONS

This application is related to commonly-assigned U.S. Patent Application Serial No. 09/768,956, entitled "RSVP Handling in 3G Networks," filed on January 24, 2001; U.S. Patent Application Serial No. 09/861,817, entitled "Application Influenced Policy," filed on May 21, 2001, U.S. Patent Application Serial No. / ,__, entitled "Method and Apparatus for Coordinating Quality of Service Requirements for Media Flows in a Multimedia Session With Bearer Resources," filed on November 5, 2001; and U.S. Patent Application Serial No. / , entitled "Media Binding to Coordinate Quality of Service Requirements for Media Flows in a Multimedia Session With IP Bearer Resources," filed on November 5, 2001.

### REFERENCE TO PRIORITY APPLICATIONS

This application claims priority from the following commonly-assigned provisional patent applications: 60/275,354 entitled "Enhancement of Authorization Token for RSVP Interworking," filed March 13, 2001; 60/273,678 entitled "SDP Support for QoS Based SIP Sessions," filed March 6, 2001; 60/269,573 entitled "QoS Characteristics for a UMTS Bearer Appropriate for IP Signaling," filed February 16, 2001; 60/269,789 entitled "Architecture for Packet Data Protocol Context Suitable for Signaling," filed February 16, 2001; 60/269,572 entitled "Binding a Signaling Bearer for Use With an IP Multimedia Subsystem," filed February 16, 2001; 60/267,737 entitled "Authorization Token in PDP Context Activation/Modification in Bearer Establishment for SIP Call Setup (Qos)," filed February 9, 2001; 60/260,766 entitled "QoS Pre-Condition Met," filed January 10, 2001; 60/260,765 entitled "IP Specific Elements in PDP Context Activation/Modification," filed January 10, 2001; 60/246,501 entitled "Principle of User Choice," filed November 6, 2000; 60/248,110 entitled "Triggering RSVP Host," filed November 13, 2000; 60/324,523, entitled "Use of GPRS APN in IMS/IPv6 Context," filed on September 26, 2001; 60/330,501, entitled "Method an Apparatus for Coordinating Charging for Services Provided in a Multimedia Session," filed October 23, 2001; and a Great Britain provisionally filed application GB prov 0115340.2, entitled "Real Time GPRS Charging for IP Multimedia," filed on June 22, 2001.

### FIELD OF THE INVENTION

The present invention generally relates to Internet Protocol (IP) networks, and more specifically, to coordinating charging for various services involved in providing multimedia sessions.

### BACKGROUND

IP networks were originally designed to carry "best effort" traffic where the network makes a "best attempt" to deliver a user packet, but does not guarantee that a user packet will arrive at the destination. Because of the market success of IP networks, there is a clear requirement for mechanisms that allow IP networks to support various types of applications. Some of these applications have Quality of Service (QoS) requirements other than "best efforts" service. Examples of such applications include various real time applications (IP Telephony, video conferencing), streaming services (audio or video), or high quality data services (browsing with bounded download delays). Recognizing these QoS requirements, the Internet Engineering Task Force (IETF), which is the main standards body for IP networking, standardized a set of protocols and mechanisms that enable IP network operators to build QoS-enabled IP networks.

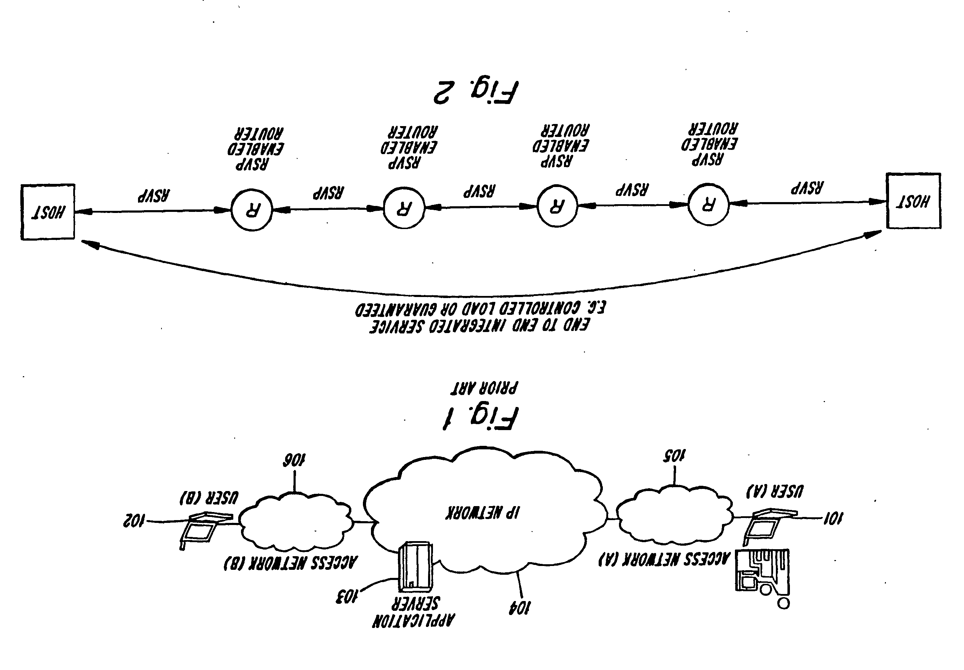

Fig. 1 depicts a simplified high-level model of an IP network which may be useful in explaining QoS provisioning. As can be appreciated, the model includes two users, but could easily be expanded to include more users without changing the basic functionality of the network. In Fig. 1, User-A 101 may communicate with User-B 102 or with an application server 103. For example, in the case of an IP telephony session, User-A 101 may communicate with User-B 102. Similarly, in the case of streaming services, User-A 101 may communicate with the application server 103, which may be configured as a video server. In either case, User-A 101 accesses an IP backbone network 104 through a local access network 105, such as the PSTN (dial-in access), a Global System for Mobile Communications (GSM), or a Universal Mobile Telecommunications System (UMTS) network. User-B 102 is similarly connected to the IP network 104 through a local access network 106. It will be appreciated that User-A and User-B need not use the same type of access network. The IP network 104 may consist of a number of IP routers and interconnecting links that together provide connectivity between the IP network's ingress and egress points and thereby make two party communication possible. As far as the users are concerned, the perceived QoS depends on the mechanisms both in the access networks 105, 106 and on the IP backbone network 104. Of particular interest to this invention is the specific case where at least one of the access networks is a UMTS or GSM/GPRS network.

When users access IP based services, they typically use a device that runs an application program that provides the interface for the user to access the particular service. For instance, in Fig. 1, User-A may use a laptop running a conferencing application program to attend an IP network based meeting, where participants of the meeting collaborate using various programs. Such programs are well known in the art.

Various user applications may access network services through an application programming interface (API). An API provides application programmers with a uniform interface to access underlying system resources. For instance, an API may be used to configure a network resource manager to require that a particular IP packet originating from a given application receive a certain treatment from the network, such as a particular QoS. For example, if the IP network is a Differentiated Services IP network, then an application program may request that all of its IP packets receive the "Expedited Forwarding" treatment.

The User (and the API in the user's equipment) may not be aware of the different technologies that various access networks and IP backbone networks employ in order to provide QoS end-to-end, i.e., from User-A all the way to remote User-B. For instance, the user application program may use an RSVP/IntServ based API, and the end-to-end embodiment in which he is involved may include a UMTS access network and a non-RSVP enabled IP network. In such cases, some "interworking" mechanisms between such different technologies and protocols are needed to make sure that the QoS is provided end-to-end.

Integrated Services (IntServ) provides a set of well-defined services which enables an application to choose among multiple, controlled levels of delivery service for their data packets. To support this capability, two things are required. First, individual network elements, such as subnets and IP routers, along the path followed by an application's data packets must support mechanisms to control the quality of service delivered to those packets. Second, a way to communicate the application's requirements to network elements along the path and to convey QoS management information between network elements and the application must be provided.

IntServ defines a number of services such as Controlled-Load (defined in IETF RFC 2211) and Guaranteed (defined in IETF RFC 2212). The service definition defines the required characteristics of the network equipment in order to deliver the service. The individual network elements (subnets and IP routers) that support the service must comply with the definitions defined for the service.

The service definition also defines the information that must be provided across the network in order to establish the service. This function may be provided in a number of ways, but it is frequently implemented by the resource reservation setup protocol (RSVP) (defined in IETF RFC 2205). RSVP (Resource reSerVation Protocol) is an IP-level resource reservation setup protocol designed for an IntServ-enabled Internet (defined in IETF RFC 1633, 2205, and 2210). The RSVP protocol is used by a host (e.g., User A's computer) to request specific service from the network for particular application data streams or flows. RSVP is also used by routers to deliver quality-of-service requests to all nodes along the path(s) of the flows and to establish and maintain the state(s) to provide the requested service. RSVP requests generally result in resources being reserved in each node along the data path.

Fig. 2 shows an End-to-End Integrated Service between the hosts. The service is, provided using routers and hosts that support the service definition defined for the required service and through signaling of the relevant information between the nodes. Since RSVP is a protocol that is primarily designed to be end-to-end, extra functionality is required in a situation where the RSVP sender would like to use it for resource reservation only in some portion of the end-to-end path. This situation may arise if RSVP is used in an access network and over-provisioning is used in the backbone network. In such situations, an RSVP (Receiver) Proxy is useful.

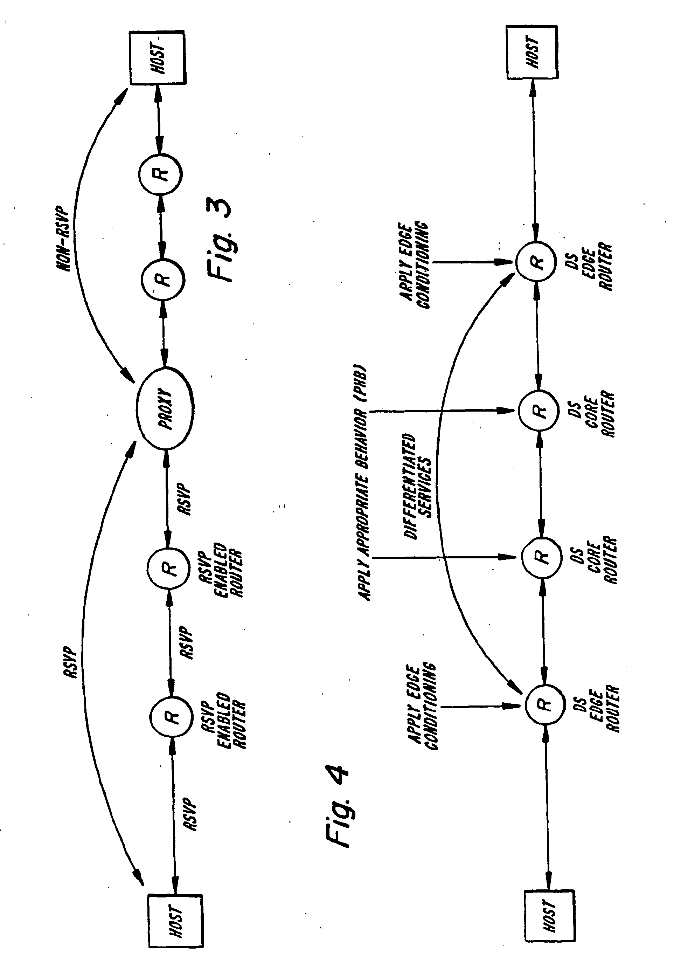

A Proxy is a network device, such as a router or a switch, that performs one or more functions on behalf of another device. An RSVP Proxy originates the RSVP RESV message in response to an incoming PATH message on behalf of the receiver(s) identified by the PATH message. (RESV and PATH are well known messages used in RSVP.) In other words, the RSVP (Receiver) Proxy acts on behalf of the remote host and thereby facilitates resource reservation between the originating host and the RSVP Proxy without the host needing to be involved in RSVP signaling. This is shown in Fig. 3. The RSVP Proxy may use knowledge of network conditions between the RSVP Proxy and the non-RSVP host.

Differentiated Services (DiffServ) enhancements to the Internet protocol are intended to enable scalable service discrimination in the Internet without the need for per-flow state and signaling at every hop. A variety of services may be built from a small, well-defined set of building blocks which are deployed in network nodes. The services may be either end-to-end or intra-domain; they include both those that can satisfy quantitative performance requirements (e.g., peak bandwidth) and those based on relative performance (e.g., "class" differentiation).

Services may be constructed by a combination of setting bits in an IP header field at network boundaries (autonomous system boundaries, internal administrative boundaries, or hosts), using those bits to determine how packets are forwarded by the nodes inside the network, and conditioning the marked packets at network boundaries in accordance with the requirements or rules of each service.

Differentiated Services defines an edge router at the network boundary, and core routers within the network. The edge and core routers have different duties. The edge router must condition the traffic to ensure that it conforms to the service agreement. It also marks the traffic with the appropriate DSCP (Differentiated Services Code Point). It then forwards the packet according to the service behavior defined for that DSCP. The service behavior, called the Per Hop Behavior (PHB) may define the prioritization or weighting of that traffic to give it better service than other traffic. The core nodes examine the DSCP and apply the service behavior appropriate for that service. Fig. 4 shows an end-to-end service. The DS edge routers perform the traffic conditioning, while the DS core routers simply apply the PHB.

Services may be constructed by a unique combination of PHB and traffic conditioning. For example, two different services can be created using the same PHB by applying a different traffic conditioning function at the edge routers.

The IntServ architecture provides a means for the delivery of end-to-end QoS to applications over heterogeneous networks. To support this end-to-end model, the IntServ architecture must be supported over a wide variety of different types of network elements. In this context, a network that supports Differentiated Services may be viewed as a network element in the total end-to-end path.

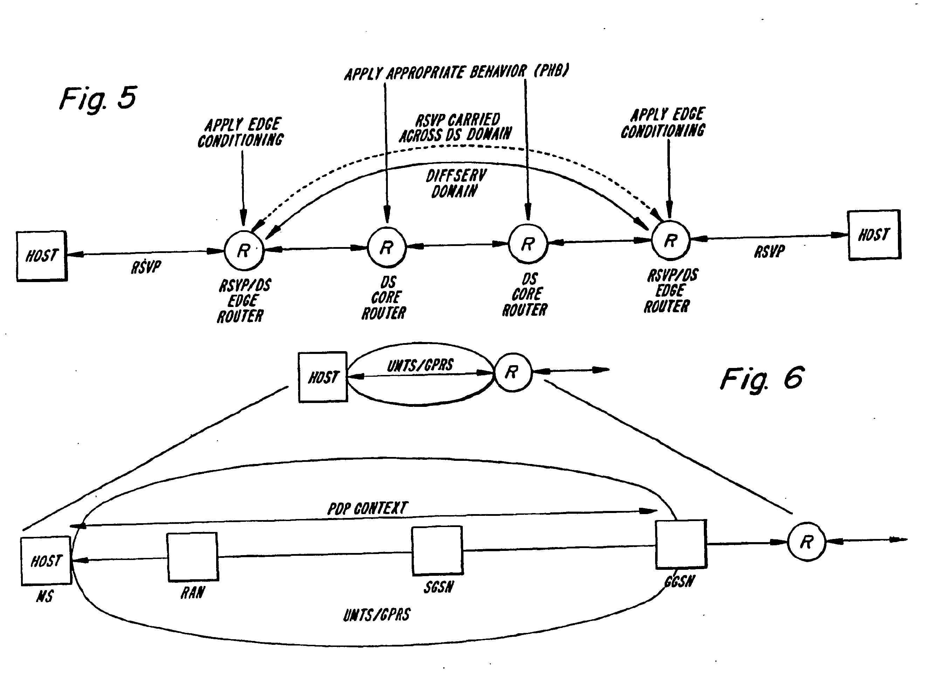

From the perspective of IntServ, DiffServ regions of the network are treated as virtual links connecting IntServ capable routers or hosts (much as an ethernet LAN can be treated as a virtual link). Within the DiffServ regions of the network, routers implement specific PHBs (aggregate traffic control). The total amount of traffic admitted into the DiffServ region that will receive a certain PHB is controlled by the conditioning at the edge routers. An IntServ service can, be provided across a DiffServ domain by applying admission control and traffic conditioning at the edge router to meet the IntServ service specification, and signaling the RSVP service characteristics of the DiffServ domain to the next RSVP enabled router. The information provided in the RSVP signaling should be appropriate for the service across the DiffServ domain. This is shown in Fig. 5.

To realize a QoS Service with clearly defined characteristics and functionality, a QoS bearer must be set up from the source to the destination of the service. A bearer is a logical connection between two entities through one or more interfaces, networks, gateways, etc., and usually corresponds to a data stream. A QoS bearer service includes all aspects to enable the provision of a contracted QoS. These aspects are among others the control signaling, user plane transport, and QoS management functionality.

Mobile Radio Access Data Networks, like General Packet Radio Service (GPRS) and Universal Mobile Telecommunication System (UMTS), may form a part of the overall network and will typically be a significant factor in the end-to-end bearer service for customers connected to it. Hence, the bearer service provided over a GPRS/UMTS network must provide the required end-to-end bearer service.

The GPRS/UMTS network includes a set of network elements between the host, referred to as the Mobile Station (MS), and an external packet switching network the user is connecting to like the Internet. These network elements are shown in Fig. 6. The radio access network (RAN) provides access over the radio interface to/from the MS. The RAN is coupled to a supporting gateway Gateway GPRS Support Node (SGSN) and a Gateway GPRS Support Node (GGSN). The GGSN provides the interworking with external packet-switched networks.

Before a mobile host can send packet data to an external host, the mobile host must "attach" to the GPRS network to make its presence known and to create a packet data protocol (PDP) context to establish a relationship with a GGSN towards the external network that the mobile host is accessing. The PDP attach procedure is carried out between the mobile host and the SGSN to establish a logical link. As a result, a temporary logical link identity is assigned to the mobile host. A PDP context is established between the mobile host and a GGSN selected based on the name of the external network to be reached. One or more application flows (sometimes called "routing contexts") may be established over a single PDP context through negotiations with the GGSN. Again, an application flow corresponds to a stream of data packets distinguishable as being associated with a particular host application. An example application flow is in an electronic mail message from the mobile host to a fixed terminal. Another example application flow is a link to a particular Internet Service Provider (ISP) to download a graphics file from a website. Both of these application flows are associated with the same mobile host and the same PDP context.

User data is transferred transparently between the MS and the external data networks with a method known as encapsulation and tunneling: data packets are equipped with PS-specific protocol information and transferred between the MS and the GGSN.

Quality of Service (QoS) has an extremely important and central role in 3^{rd} generation (3G) UMTS mobile networks. QoS is a means for providing end users with satisfying service. QoS also enables efficient use of the spectrum of resources. Because the invention will be described in terms of a UMTS QoS architecture, a brief overview of QoS in UMTS is provided. The 3G UMTS QoS architecture is described, including an explanation of the packet data protocol context (PDP context), a traffic flow template (TFT), and the QoS maintenance procedures for activated UMTS bearers. It is expected that the QoS characteristics associated with a radio communication are the most critical in the end-to-end chain. Within UMTS access networks, the radio network resources are managed on a per PDP context level, which corresponds to one or more user flows/data streams and a certain QoS level.

The QoS framework for 3G networks is specified in the 3G specification (3GPP) TS23.107. The main focus is on the QoS architecture to be used in the UMTS level, where the list of QoS attributes applicable to UMTS Bearer Service and the Radio Access Bearer Service are specified along with appropriate mapping rules. TS23.060 specifies the general mechanisms used by data packet connectivity services in the UMTS level, which includes the General Packet Radio Service (GPRS) in GSM and UMTS.

In a UMTS QoS Architecture, a network service is considered to be end-to-end, from a Terminal Equipment (TE) to another TE. To realize a certain end-to-end QoS, a bearer service with clearly defined characteristics and functionality is set up from the source to the destination of a service. Again, the bearer service includes those aspects needed to enable the provision of a contracted QoS, e.g., control signaling, user plane transport, QoS management and functionality.

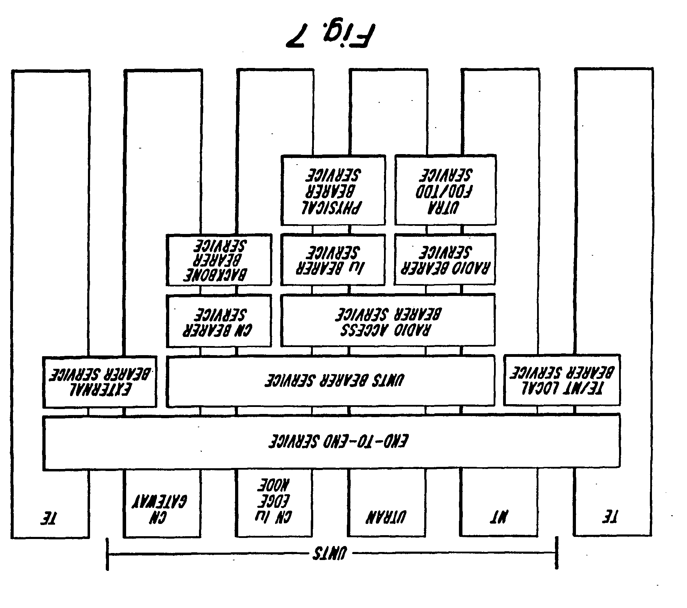

A UMTS bearer service layered architecture is depicted in Fig. 7. Each bearer service on a specific layer offers its individual services using services provided by the layers below. Bearers at one layer are broken down into underlying bearers, each one providing a QoS realized independently of the other bearers. Service agreements are made between network components, which are arranged horizontally in Fig. 7. The service agreements may be executed by one or more layers of service. For instance, the UMTS bearer service consists of a Radio Access Bearer (RAB) service and a Core Network (CN) bearer service. The RAB services is then divided into a radio bearer service and a Iu bearer service. The Iu interface is the interface between the radio access network and the core network.

The following are examples of the entities shown in Fig. 7. The terminal equipment (TE) may be a laptop and the mobile terminal (MT) may be a cellular radio handset. The UTRAN may be made up of a combination of radio base stations called Node B's and radio network controllers (RNCs). The Core Network (CN) Iu Edge Node may be a serving GPRS support node (SGSN), and the CN Gateway may be a gateway GPRS support node (GGSN).

The QoS management functions in UMTS are used to establish, modify and maintain a UMTS Bearer Service with a specific QoS, as defined by specific QoS attributes. The QoS management functions of all the UMTS entities ensure provision of the negotiated UMTS bearer service.

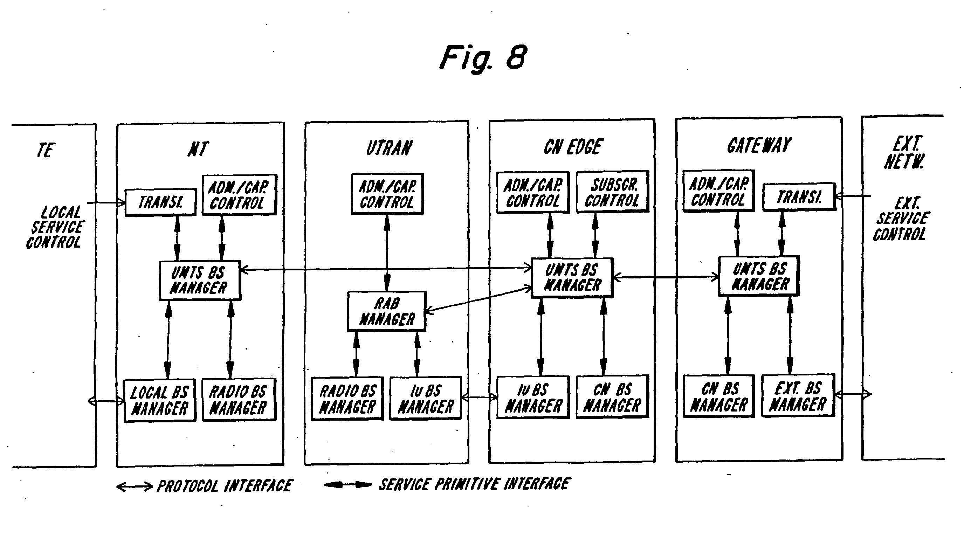

The UMTS architecture comprises four management functions in the control plane and four in the user plane. The four control plane management functions are shown in Fig. 8.
- Bearer Service (BS) Manager sets up, controls, and terminates the corresponding bearer service. Each BS manager also translates the attributes of its level to attributes of the underlying bearer service during service requests.
- Translation function converts between external service signaling and internal service primitives including the translation of the service attributes, and is located in the MT and in the CN Gateway.
- Admission/Capability control determines whether the network entity supports the specific requested service, and whether the required resources are available.
- Subscription Control determines whether the user has the subscription for the bearer being requested.

The four user plane management functions are:
- Classification function resides in the GGSN and in the MT. It assigns user data units (e.g. IP packets) received from the external bearer service from the remote terminal (or the local bearer service) from the local terminal to the appropriate UMTS bearer service according to the QoS requirements of each user data unit. This is where the traffic flow template (TFT) and packet filters are situated, as described below.
- Mapping function marks each data unit with the specific QoS indication related to the bearer service to which it has been classified. For example, it adds different service code points to packets before putting them on the Iu or CN bearer.
- Resource Manager distributes its resources between all bearer services that are requesting use of these resources. The resource manager attempts to provide the QoS attributes required for each individual bearer service. An example of resource manager is a packet scheduler.
- Traffic conditioner is a shaping and policing function which provides conformance of the user data traffic with the QoS attributes of the concerned UMTS bearer service. This resides in the GGSN and in the MT as well as in the UTRAN.

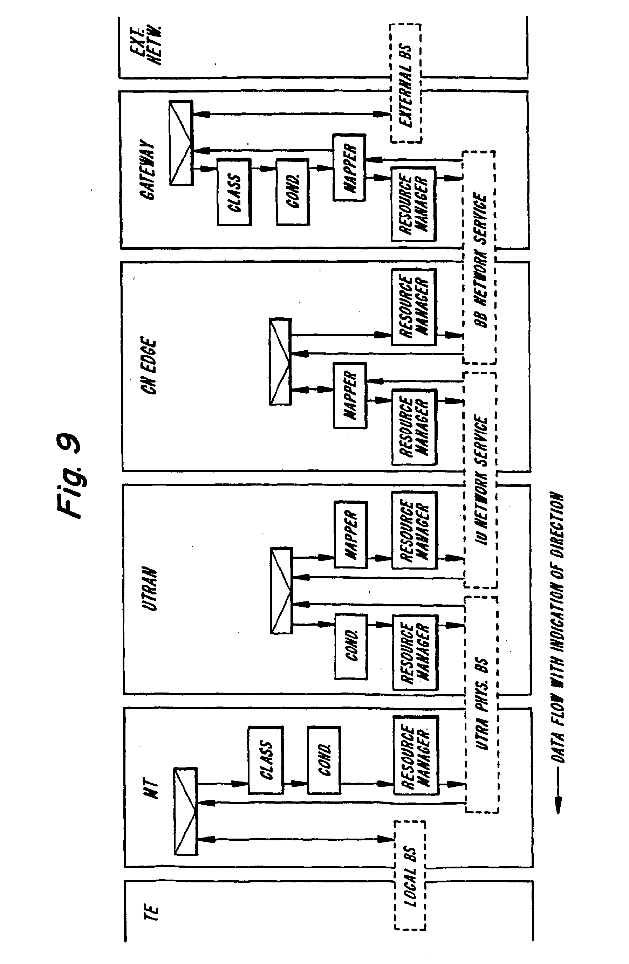

The QoS management functions of the UMTS bearer service in the user plane are shown in Fig. 9. These functions together maintain the data transfer characteristics according to the commitments established by the UMTS bearer service control functions, expressed by the bearer service attributes. The user plane uses the QoS attributes. The relevant attributes are provided to the user plane management functions by the QoS management control functions.

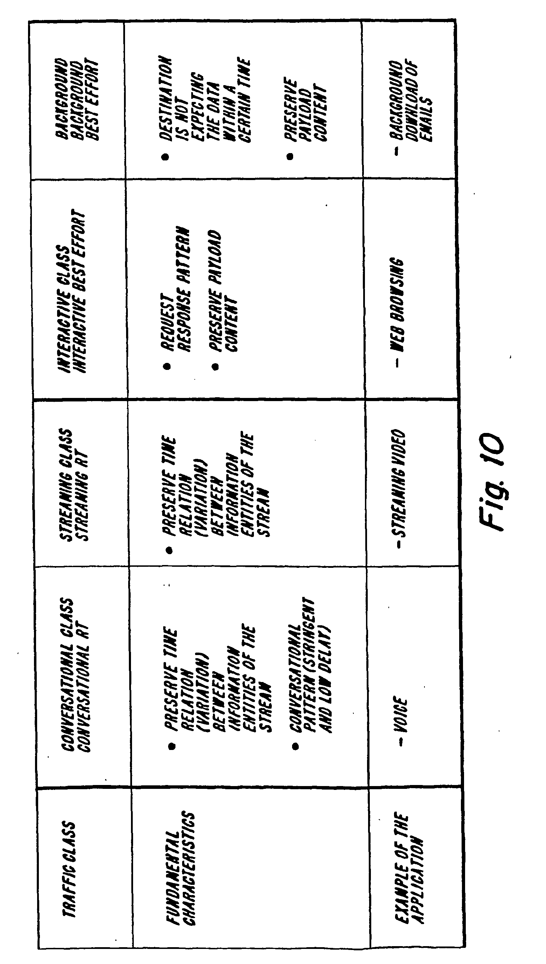

Four different QoS classes standardized in UMTS are shown in Fig. 10. Data transport may be optimized for the corresponding type of application data or for a bearer service of a certain class. The main distinguishing factor between these classes is how delay sensitive the traffic is: Conversational class is meant for traffic which is very delay sensitive (for real-time services) while Background class is the most delay insensitive traffic class (for non-real time services). Other differences between the classes include bit error rate and packet loss rate.

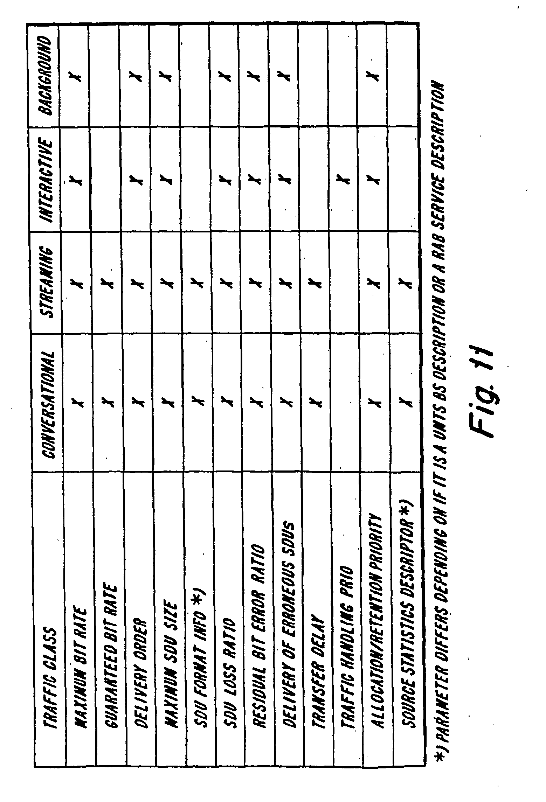

To characterize a bearer service in detail, a set of bearer service attributes are standardized in UMTS as shown in the tables referenced below. A certain QoS is requested by selecting a set of attribute values that describes the bearer requirement. Parameters differ depending on the type of bearer service requested. Fig. 11 shows which attributes that are applicable to which traffic class.

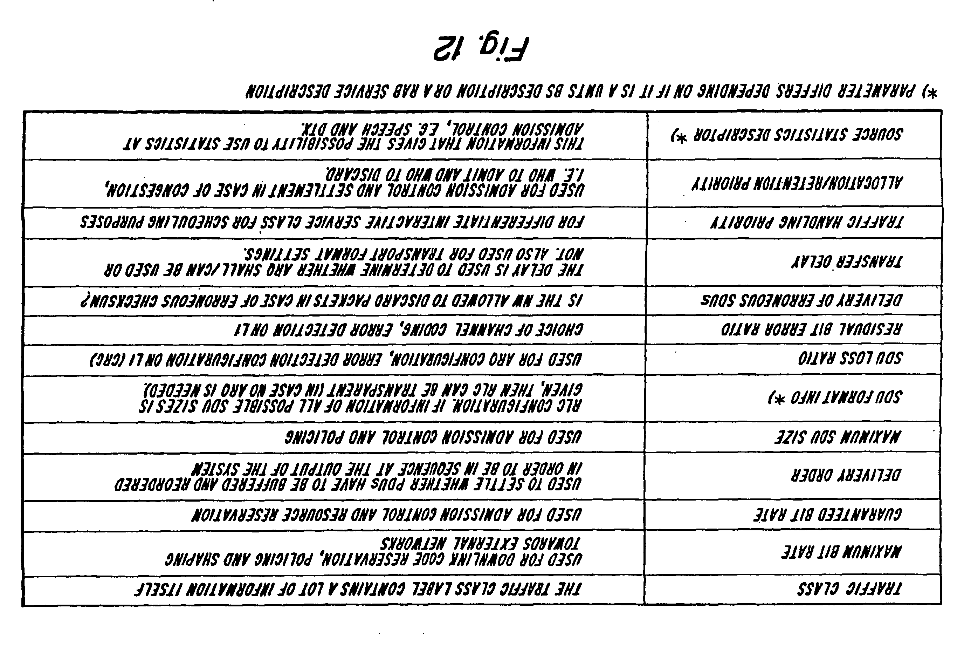

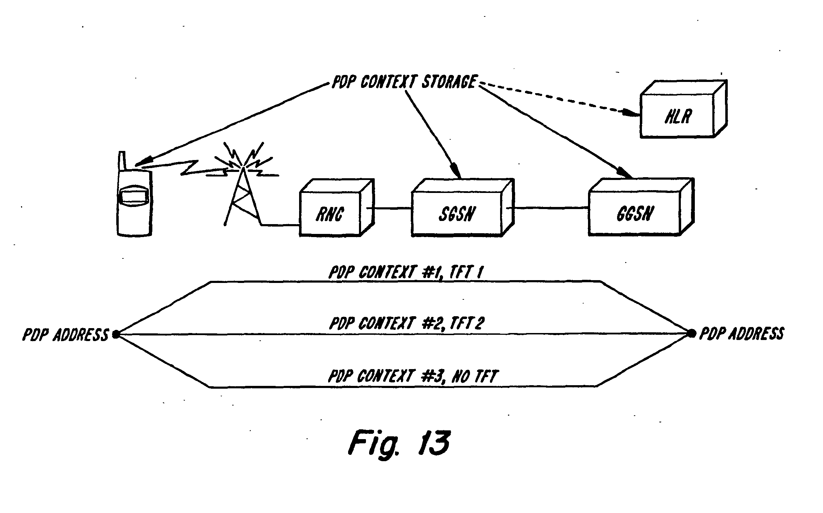

Fig. 12 provides an overview of uses for different QoS attributes. The exact definitions of the QoS attributes can be found in TS23.107. A subscription is associated with one or more Packet Data Protocol (PDP) addresses, i.e., IP addresses in the case of IP traffic. Each PDP address is described by one or more PDP contexts stored in the MS, the SGSN, and the GGSN. Default values are also available in the cellular system data base, e.g., the HLR, which holds the subscription information. Each PDP context may be associated with a Traffic Flow Template (TFT). At most, one PDP context (associated with the same PDP address) may exist at any time with no TFT assigned to it. The relationship between PDP address, PDP context, and TFT is provided in Fig. 13.

A PDP context is implemented as a dynamic table of data entries, comprising all needed information for transferring PDP PDUs between MS and GGSN, for example addressing information, flow control variables, QoS profile, charging information, etc. The relation between UMTS bearer services and PDP context is a one-to-one mapping, i.e., if two UMTS bearer services are established for one PDP address, two PDP contexts are defined. The PDP context procedures are standardized in TS23.060. The concepts surrounding the QoS profile and the Traffic Flow Template (TFT) are relevant from the QoS perspective.

The UMTS QoS attributes have been selected and defined mainly for supporting efficient radio realization. A QoS profile is defined by a set of UMTS QoS attributes. The RNC obtains the pertinent radio access bearer (RAB) QoS profile from the SGSN during PDP context activation. There are three different QoS profiles involved in a PDP context activation - the requested QoS profile, the negotiated QoS profile, and the subscribed QoS profile (or the default QoS profile).

A Traffic Flow Template (TFT) is a packet filter (or set of filters) that associates packets to the correct PDP context thereby ensuring that packets are properly forwarded with correct QoS characteristics. The TFT enables the possibility of having several PDP contexts with varying QoS profiles, associated to a single PDP address. The TFT is managed and initiated by the MT both for the uplink and downlink flows. The uplink TFT resides in the MT, while the downlink TFT resides in the GGSN. The downlink TFT is sent from the MT to the GGSN during PDP context activation / modification. The downlink TFT's may be added to a PDP context that was created without one, and the contents may be modified as well.

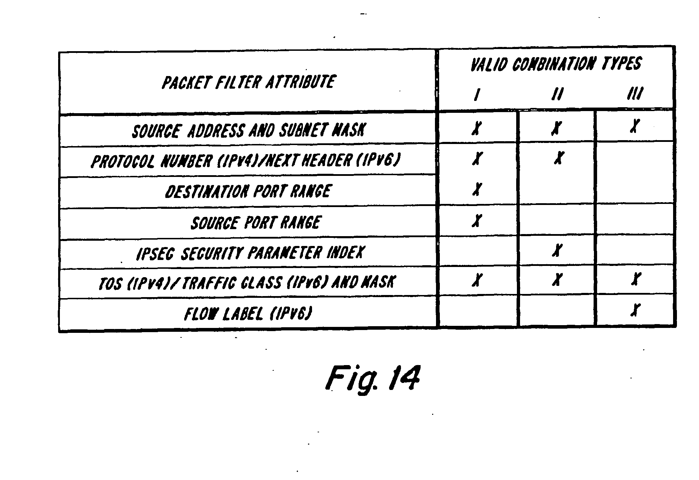

Fig. 14 shows TFT packet filter attributes and valid combinations. Each TFT has an identifier and an evaluation precedence index that is unique within all TFT's associated with the PDP contexts that share the same PDP address. The MS manages the identifiers and the evaluation precedence indices of the TFT's, as well as the packet filter contents. Some of the attributes in Fig. 14 may coexist in a packet filter while others mutually exclude each other. Only those attributes marked with an "X" may be specified for a single packet filter. All the marked attributes may be specified, but at least one has to be specified.

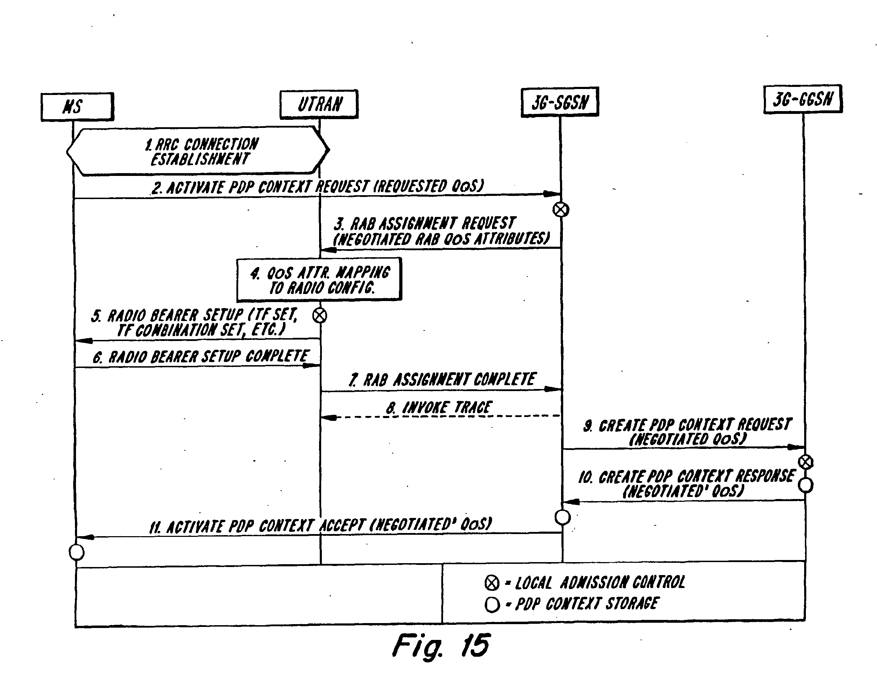

The PDP context signaling carries the requested and negotiated QoS profile between the nodes in the UMTS network. It has a central role for QoS handling in terms of admission control, negotiation, and modifying of bearers on a QoS level. The PDP context signaling message exchanges are described below with reference to the numerals in Fig. 15.
1. An RRC connection establishment is performed. This procedure is needed for establishing a connection, but does not cover more from a QoS perspective than that the type of radio channel is roughly indicated.
2. The MS sends a PDP message, "Activate PDP context request," to the SGSN. The requested QoS profile is included in this message. At this stage, the SGSN makes an admission check and might restrict the requested QoS if the system is overloaded.
3. The SGSN sends a RANAP message, "RAB Assignment Request," to the RNC in the UTRAN. RANAP, or Radio Access Network Application Part, is an application protocol for supporting signaling and control transmission between the UTRAN and the external CN. RANAP permits communication between the UTRAN and circuit-switched or packet-switched networks. This request to establish a radio access bearer (RAB) service carries the (perhaps modified) RAB QoS attributes.
4. From the RAB QoS attributes, the RNC determines the radio-related parameters corresponding to the QoS profile, e.g., transport format set, transport format combination set, etc. In addition, the UTRAN performs an admission control on this bearer.
5. The RNC sends an RRC message, "Radio Bearer Set-up," to the MS. The RRC message includes the radio-related parameters that were determined in step 4.
6. The UTRAN and the MS apply the radio parameters and are ready to transfer traffic. To signal this, the MS sends a "Radio Bearer Set-up Complete" RRC message to the RNC.
7. The UTRAN sends a "RAB Assignment Complete" RANAP message to the SGSN.
8. A Trace procedure may be initiated. This is an operation and maintenance function for surveying subscribers.
9. The SGSN sends a "Create PDP Context Request" to the GGSN carrying the QoS profile. However, the QoS profile may have different parameters than those requested by the MS in step 2. Based on this profile, an admission control is performed at the GGSN level, and the GGSN may restrict the QoS if, for example, the system is overloaded. The GGSN stores the PDP context in its databases.
10. The GGSN returns the negotiated QoS to the SGSN in a "Create PDP Context Response" message and the SGSN stores the PDP context in its database.
11. The negotiated QoS is sent from the SGSN to the MS in an "Activate PDP Context Accept" message. If either the SGSN or the GGSN has modified the QoS profile, then the MS has to either accept or reject this profile.

Several admission controls take place in the procedure. Because bandwidth associated with radio is the most expensive resource, the UTRAN is consulted in determining whether radio resources are available during PDP context activation or modification. In other words, admission control in UMTS is performed in a radio centric manner.

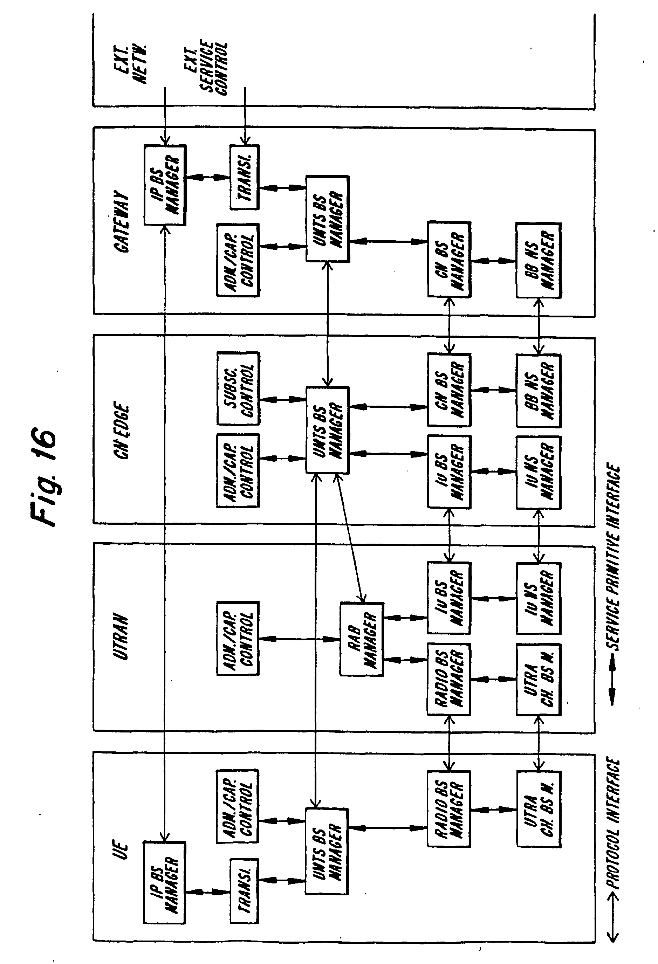

To provide IP QoS end-to-end, it is necessary to manage the QoS within each domain. An IP BS Manager in the Gateway is used to control the external IP bearer service. Due to the different techniques used within the IP network, this is communicated to the UMTS BS manager through the Translation function. There is a likewise a need for an IP bearer service manager function to be provided in UE, where the bearer service manager maps the QoS requirements of the application to the appropriate QoS mechanisms. Fig. 16 shows the embodiment for control of an IP service using IP BS Managers in both possible locations in the UE and Gateway node. Fig. 16 also indicates the optional communication path between the IP BS Managers in the UE and the Gateway node. The IP BS Managers use standard IP mechanisms to manage the IP bearer service. These mechanisms may be different from mechanisms used within the UMTS, and may have different parameters controlling the service. The translation/mapping function provides the interworking between the mechanisms and parameters used within the UMTS bearer service and those used within the IP bearer service, and interacts with the IP BS Manager. If an IP BS Manager exists both in the UE and the Gateway node, it is possible that these IP BS Managers communicate directly with each other by using relevant signaling protocols.

An IP Multimedia Service ("IMS") may be defined "on top" of the GPRS bearer service to provide multimedia sessions to end users. The quality of service aspects of bearers supporting IP multimedia is specified in the 3GPP TS 23.207, and the IP multimedia specification is set forth in the 3GPP TS 23.228. The IMS is based on IP application signaling, which in a preferred, example embodiment includes session initiation protocol (SIP) and session description protocol (SDP). SIP is a signaling protocol to establish sessions, and SDP is a text-based syntax to describe the session and includes, for example, the definition of each media stream in the session.

For multimedia sessions, it is important that network managers and services providers be able to monitor, control, and enforce the use of network resources and services based on "policies" derived from certain established criteria such as the identity/authority level of users and applications, traffic bandwidth requirements, security considerations, time of day/week, etc. Because there are varying circumstances in which various entities are entitled to use the services they request, there is a need for rules, a need for enforcement methods of these rules, and a need for a "judge" to decide when they apply. Accordingly, three major components of a policy system include policy rules, which are typically stored in a policy database, policy enforcement, which may be implemented at Policy Enforcement Points (PEP), and Policy Decision Points. The IETF has standardized a protocol for information exchange between PEPs and Policy Decision Points under the term Common Open Policy Service (COPS). In general, a policy may be regarded as a collection of rules that result in one or more actions when specific conditions exist.

Session level policy controls, such as the service-based local policy control described in commonly-assigned U.S. Patent Application No. 09/861,817, entitled "Application Influenced Policy," cannot automatically be applied to PDP contexts unless the relationship of the various media streams to the PDP contexts is known. That is because such relationships are under the control of the end user establishing the multimedia session, the various media streams, and the corresponding quality of service parameters associated with those media streams.

Two of the commonly-assigned applications referenced above, U.S. Patent Application Serial No. _/_,_, entitled "Method and Apparatus for Coordinating Quality of Service Requirements for Media Flows in a Multimedia Session With Bearer Resources," filed on November 5, 2001; and U.S. Patent Application Serial No. _/_,_ , entitled "Media Binding to Coordinate Quality of Service Requirements for Media Flows in a Multimedia Session With IP Bearer Resources," filed on November 5, 2001, describe mechanisms for communicating effectively and efficiently the relationship between a session, media flows in that session, and the quality of service required by each media flow in order to request, reserve, supply, and enforce the resources necessary to support each media flow at the IP/PDP bearer level. These mechanisms facilitate interworking and cooperation in end-to-end user sessions where the backbone network uses one protocol, e.g., RSVP, to manage/reserve backbone resources for a session while the mobile terminal/UMTS network uses another protocol, e.g., PDP context information, to interwork with backbone quality of service reservation/management mechanisms.

Multimedia sessions provide operators with opportunities and challenges when it comes to charging for multimedia session services. Certain network operators may want to charge subscribers separately for using the GPRS access network (or a similar access network) using one charging metric, e.g., charge per unit of data, and for session level services using another charging metric, e.g., charge per unit time. However, it is more likely that many may want to issue a single charge for using a multimedia service. One reason is to simplify subscriber bills and accounting. Another reason is to permit network operators to offer a single multimedia session charge which is less than the sum of plural separate charges associated with each separate service employed in a multimedia session.

A further factor to consider is that some operators intending to offer IP multimedia services may want to charge according to established GSM charging principles. This means, among other things, that charges for use of the GPRS access network would be based on time and quality of service. It also means that all of the components involved in the call should be linked together to permit accurate charging considering the time, locations of subscribers, type of service, type of access, etc. It may further include the possibility for an "A-party pays" charging model, where the originating party/side pays for the cost of the entire session just like what is available today in GSM when the terminating B-party is not roaming. For this case, all components involved in the call from both the A-party side and the B-party side should be linked together. Yet another factor is the desirability of linking service-based local policy (SBLP) enforcement, (e.g., as described in U.S. Patent Application Serial No. 09/861,817, entitled "Application Influenced Policy," filed on May 21, 2001), to multimedia session charging.

EP 1 014 619 A relates to charging and accounting in a communication network comprising a first network part and a second network part. The first network part can be a circuit switched and the second network part can be a packet switched network part. The first network part produces a call data record assigned to each call initiated and established from the first network part, said call initiating a session in the second network part via the interface. The second network part generates a session data record assigned to said session and comprising session information being transferred from the second network part to the first network part via the interface.

Within the first network part, there are means for charging and accounting the call on the basis of the call data record and said session information of the call data record.

WO99 16266 A relates to quality of service based, radio Internet access in order to support multiple application services including voice, data, and multimedia. A quality of service is defined for each individual application flow. Selection of a particular type of transfer mechanism that is best suited to transfer the individual application flow in accordance with its quality of service requirements is also permitted.

WO 99 48310 A also relates to control the quality of service in mobile communications systems having a packet data transmission capability. A dynamic packet-based quality of service mechanism is provided within a "transmission tunnel" defined by a more static packet data protocol context.

WO 97 26739 A relates to carrying out charging in packet radio networks. A support node is provided for the internal backbone network of the packet radio network for establishing a gateway from the packet radio network to the actual billing system.

These and perhaps other factors point to a need for a mechanism to correlate charging information associated with an IP multimedia system which services a multimedia call on a session level and charging information associated with an access bearer network for services provided in the multimedia session on a PDP context/bearer access level to allow operators to take advantage of the information received from both levels to provide flexibility in charging for multimedia sessions.

The present invention provides a mechanism for coordinating charging for a multimedia session between a mobile terminal and a remote host on both an application/session level and on an IP/access bearer level. The multimedia session is established over a radio access network via a packet-switched access network coupled to a multimedia system. The multimedia system has one or more multimedia servers for providing multimedia services for multimedia sessions. A token associated with the multimedia session is generated. Using the token, session charges associated with the multimedia session are correlated for a first operation performed in the packet-switched access network and for a second operation performed by the multimedia system. A first entity in the packet-switched access network includes the session token in a first charging message associated with the session sent to a charging entity. A second entity in the multimedia system includes the session token in a second charging message associated with the session to be sent to the charging entity.

The charging messages may take any number of forms including, for example, first and second call data records (CDRs), first and second charging instances, and different types of charging messages, such as a Customized Applications for Mobile network Enhanced Logic (CAMEL) charging message used in some GSM networks for the first charging message, and a DIAMETER-based charging message used in some IP networks for the second charging message. The first charging message might include, for example, information relating to access bearer services, e.g., location of the mobile terminal, location of the remote host, volume of packets sent or received, quality of service parameters associated with one or more of the packet access bearers employed in the multimedia session, and times. The second charging message may include information related to multimedia services provided at a session level such as type of multimedia service, identity of originating and terminating entities, service-based local policy restrictions, discounted charging scenarios, and amount of time in which session resources are used.

In a non-limiting, example detail, the token may include a session identifier which may, together with a flow identifier generated by the mobile terminal, be used to identify the specific session media flow that will use the packet access network bearer to be correlated to the session. That bearer-specific token may be used to correlate bearer level charges for each media data stream with session level charges for each media data stream.

The token may also be used by the mobile terminal to indicate whether the mobile terminal agrees to a certain charging arrangement for the multimedia session. For example, when the token is issued by the home network operator, the fact of the mobile terminal sending that token to the packet-switched access network may indicate that the mobile terminal agrees to a charging arrangement for the multimedia session where bearer level and session level services for the session are combined or bundled together, rather than charged for separately as they would be if the token was not sent. In addition, sending the token to the packet access network may indicate the mobile terminal's agreement to a service level contract with a home network operator. In either situation, the home network operator issued token is used by the charging entity to correlate or bundle together session level and bearer level services for charging purposes.

The token may be issued by an entity associated with a visited network operator. In this case, the mobile terminal may indicate agreement to service-based local policy (SBLP) enforcement of bearer services in the visited network by sending the token to the packet access network. The packet access network may then send an indication of SBLP enforcement to the charging entity so that the charging entity can take such SBLP into account in charging, e.g., charge at a discounted rate to reward the UE for submitting to SBLP.

In a preferred, non-limiting, example application of the present invention, the mobile terminal is coupled to an IP-based multimedia system (IMS) that provides multimedia services by way of a GPRS network. A service charge identifier corresponding to the session is provided to an IMS entity in the IMS and to a GPRS entity in the GPRS network. Charges relating to services provided in the IMS and in the GPRS network for the session are correlated using the service charging identifier.

The IMS entity may be a call state control function (CSCF) which generates the service charge identifier and sends it to the mobile terminal. If the CSCF is a Serving-CSCF (S-CSCF) associated with the mobile's home network, the mobile terminal can indicate agreement to a service charging arrangement simply by sending the service charging identifier generated by the S-CSCF to the GPRS network. This service charging identifier also allows the charging entity to "bundle" the session level service charges with the PDP context/GPRS bearer level services into one service charge.

The IMS entity generating the service charging identifier may be a Proxy-CSCF (P-CSCF) associated with a network visited by the mobile terminal. As described above, the fact of the mobile terminal sending the service charging identifier to the GPRS network may be used to indicate the mobile's agreement to service-based local policy (SBLP) enforcement of bearer services at the GPRS network level based on policy information for the session provided by the P-CSCF to a gatekeeper node in the GPRS network. The gatekeeper may send an "SBLP-implemented indicator" to the charging entity to indicate that SBLP has been applied in this session. The charging node may take into account that SBLP application in formulating the session charges, e.g., provide a discount to reward the user for agreeing to SBLP in the visited network.

In a preferred example implementation detail, the mobile terminal includes the service charging identifier in a packet data protocol (PDP) context message sent to a node in the GPRS network. The service charging identifier may be included in a PDP configuration options (PCO) field. If the GPRS node is a serving GPRS support node (SGSN), the SGSN may send the service charging identifier with charging information via the GSM-Camel interface for pre-paid services/real-time charging or via a call data record (CDR) for off-line charging to a home network cost control node. The cost control node may perform a variety of charging operations including bundled bearer-service charging, real-time charging, or prepaid charging. A gateway GPRS support node (GGSN) may employ the service charging identifier in a PDP context response message to the SGSN and/or in service based local policy (SBLP) setup, enforcement, and/or charging. The GGSN may send the service charging identifier with charging information via CDR for off-line charging to a home network cost control node.

In another preferred example implementation detail, where a calling party A has a session established with a called party B, a common service charging identifier is passed on to their respective packet-switched access networks and multimedia systems. The common service charging identifier is used by one or more charging nodes to correlate the charges from both A and B sides. This approach facilitates the "A-party pays" charging model, where the originating side party A pays for the cost of the entire session just like what is available today in GSM when the terminating B-party is not roaming. Alternatively, each side uses its own service charging identifier, and the correlation of the two service charging identifiers is carried out via communication between the two charging nodes. Using different service charging identifiers eliminates the need for a global service charging identifier for the session, which is more difficult to handle/standardize.

### BRIEF DESCRIPTION OF THE DRAWINGS

The foregoing and other objects, features, and advantages of the present invention may be more readily understood with reference to the following description taken in conjunction with the accompanying drawings.
Fig. 1 is a block diagram of a high level IP network;
Fig. 2 is a block diagram depicting an example of a network employing end-to-end integrated services;
Fig. 3 is a block diagram depicting an example of a network employing an RSVP proxy;
Fig. 4 is a block diagram depicting an example of a network employing end-to-end differentiated services;
Fig. 5 is a block diagram depicting an example of a network employing RSVP signaling interworking with differentiated services;
Fig. 6 is a block diagram depicting a mobile access data network modeled as a DiffServ network;
Fig. 7 is a block diagram of a UMTS quality of service architecture;
Fig. 8 is a block diagram depicting quality of service management for UMTS bearer services in the control plane;
Fig. 9 is a block diagram depicting quality of service management functions for UMTS bearer services in the user plane;
Fig. 10 is a table of UMTS quality of services classes;
Fig. 11 is a table of quality of service attributes;
Fig. 12 is a table providing an overview of some uses for the quality of service attributes illustrated in Fig. 11;
Fig. 13 is a block diagram of the relationship between PDP address, PDP context, and TFT;
Fig. 14 is a table of valid combinations of TFT packet filter attributes;
Fig. 15 is a diagram of PDP context message exchanges;
Fig. 16 is a block diagram of the quality of service management functions for UMTS bearer services in the control plane and quality of service management functions for end-to-end IP quality of service;
Fig. 17 illustrates a communications system in which a multimedia session may be established between a mobile terminal and a remote host;
Fig. 18 illustrates in more detail a multimedia session in the communications system shown in Fig. 17;
Fig. 19 illustrates in flowchart form procedures for multimedia charging in accordance with an example embodiment of the present invention;
Fig. 20 illustrates a GPRS/UMTS-based communication system for conducting multimedia sessions in accordance with another example embodiment of the present invention;
Fig. 21 is a flowchart illustrating example procedures for multimedia charging for a multimedia session in the system shown in Fig. 19;
Fig. 22 is a flowchart illustrating example procedures implemented by a mobile terminal to facilitate multimedia charging using a service charging ID;
Fig. 23 is a flowchart illustrating example procedures implemented by a GPRS that may be implemented by a GPRS node for using a service charging ID in a number of different messages relating to the multimedia session;
Fig. 24 is a flowchart illustrating example procedures for a CSCF entity for generating and using a service charging identifier for a multimedia session;
Fig. 25 is a flowchart illustrating example procedures for a charging entity for receiving and correlating charging information for a multimedia session using a service charging identifier;
Fig. 26 illustrates a GPRS/UMTS-based communication system for conducting multimedia sessions showing session charging using two charging nodes;
Fig. 27 is a signaling diagram illustrating various signals for establishing and charging for a multimedia session in accordance with one example, non-limiting embodiment of the present invention; and
Fig. 28 is a signaling diagram illustrating various signals for establishing and charging for a multimedia session in accordance with another example, non-limiting embodiment of the present invention.

### DETAILED DESCRIPTION

In the following description, for purposes of explanation and not limitation, specific details are set forth, such as particular embodiments, procedures, techniques, etc. in order to provide a thorough understanding of the present invention. However, it will be apparent to one skilled in the art that the present invention may be practiced in other embodiments that depart from these specific details. For example, while the present invention is described in an example application to GPRS/UMTS systems, the present invention may be employed in any cellular radio system that offers multimedia services.

In some instances, detailed descriptions of well-known methods, interfaces, devices, and signaling techniques are omitted so as not to obscure the description of the present invention with unnecessary detail. Moreover, individual function blocks are shown in some of the figures. Those skilled in the art will appreciate that the functions may be implemented using individual hardware circuits, using software functioning in conjunction with a suitably programmed digital microprocessor or general purpose computer, using an application specific integrated circuit (ASIC), and/or using one or more digital signal processors (DSPs).

In the following description, a mobile terminal is used as one example of a user equipment (UE) allowing a user access to network services. In a mobile radio communications system, the interface between the user equipment and the network is the radio interface. Thus, although the present invention is-described using the term "mobile terminal," the present invention may be applied to any type or configuration of user equipment that can communicate over a radio interface.

As explained above, to provide IP quality of service end-to-end from mobile terminal to a remote host, it is necessary to manage the quality of service within each domain in the end-to-end path where each domain corresponds to a set of nodes using the same QoS mechanism. An IP bearer service manager may be used to control the external IP bearer service through the external packet data network, e.g., the Internet, to the remote host. However, there must be a way to interwork resources owned or controlled by the UMTS network and resources in the external packet data network. This is particularly important for multimedia-type communications between a mobile terminal and remote host.

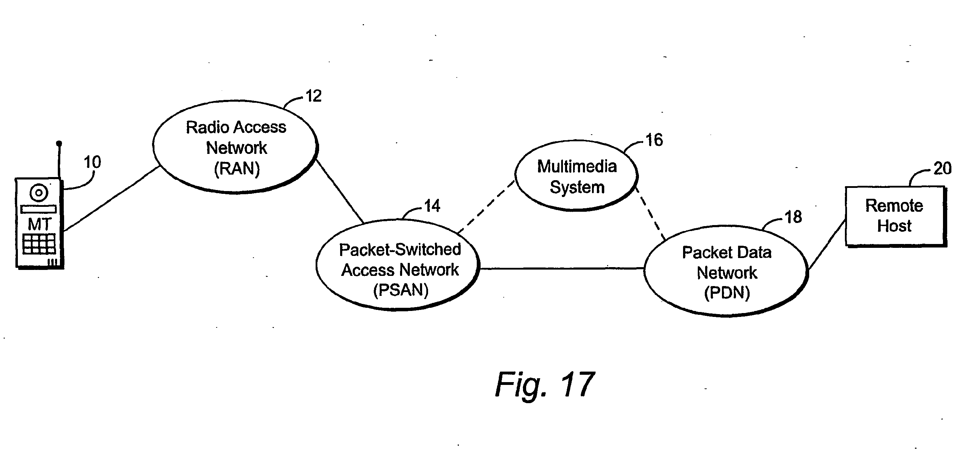

Consider the example, simplified communications system shown in Fig. 17 which permits a Mobile Terminal (MT) 10 to Initiate and conduct a multimedia session with a remote host 20. The remote host can be a fixed or wireless device. The mobile terminal 10 is coupled to a radio access network (RAN) 12 over the radio interface. The RAN 12 is coupled to a packet-switched access network (PSAN) 14, which in turn is coupled to a Packet Data Network (PDN) 18 to which the remote host 20 is coupled. The basic traffic flow for a multimedia session (shown as solid lines) between the mobile terminal 10 and the remote host 20 is transported via these three networks 12, 14, and 18. The PSAN 14 and the PDN 18 communicate multimedia control signaling (shown as dashed lines) to a Multimedia System 16.

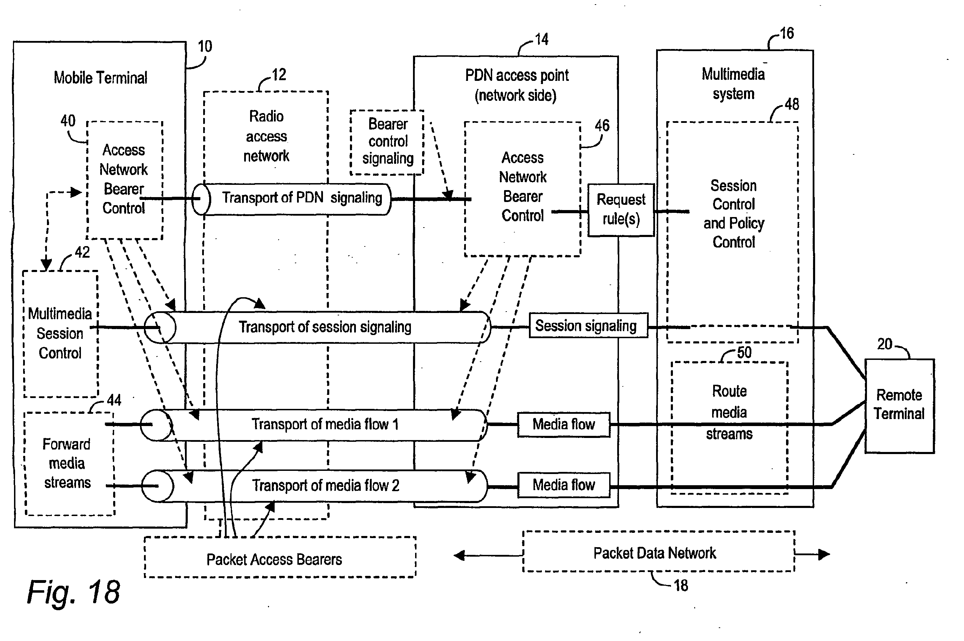

Fig. 18 illustrates, in a functional block diagram format, elements involved in setting up a multimedia session. The mobile terminal 10 includes Access Network Bearer Control 40 coupled to multimedia session control 42. The Access Network Bearer Control block 40 transports internal bearer control signaling, which is not dedicated to a particular session, to an Access Network Bearer Control block 46 in the packet data network access point 14 transparently over the radio access network over a PDN signaling transport bearer. Both Access Network Bearer Control blocks 40 and 46 assist in establishing a packet access bearer for setting up the session shown as the pipe entitled "transport of session signaling." Over this bearer, the mobile terminal 10 initiates a multimedia session including a plurality of media data streams with the remote terminal 20. Each media data stream or "flow" is transported over a corresponding packet access bearer illustrated as a "transport of media flow" pipe coupled to a Forward Media Streams block 44 in the mobile terminal. Two media flows 1 and 2 are shown for purposes of illustration in this multimedia session. The multimedia system 16 in the packet data network 18 employs a Route Media Streams block 50 to route the packets in each media flow between the mobile terminal 10 and the remote terminal/host 20. Multimedia system 16 also includes a Session Control and Policy Control block 48 that utilizes the session signaling from the Multimedia Session Control block 42 in the mobile terminal 10 to correlate each multimedia flow and its corresponding quality of service requirements with the session to establish necessary admission and policy enforcement rules for the session. Those rules are provided upon request to the Access Network Bearer Control block 46 which performs admission and policy enforcement operations for the session in accordance with the obtained session rules.

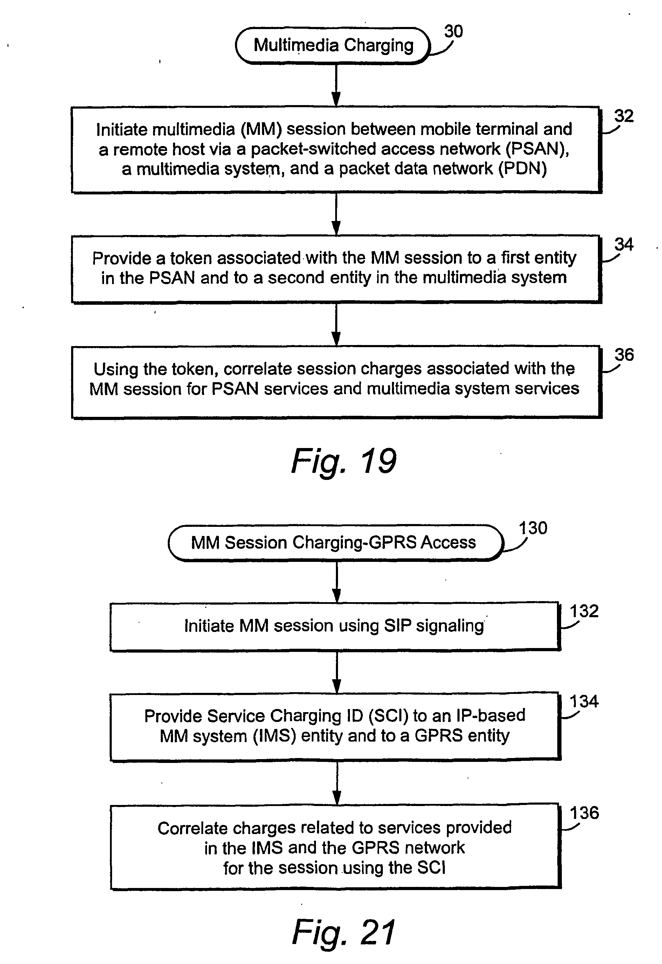

Reference is now made to a Multimedia Charging (block 30) set of procedures shown in flowchart format in Fig. 19. A multimedia (MM) session is initiated between a mobile terminal and a remote host via a packet-switched access network (PSAN), a multimedia system, and a packet data network (PDN) (block 32). A token associated with the multimedia session is provided to a first entity in the PSAN and to a second entity in the multimedia system (block 34). Using the token, session charges associated with the multimedia session are correlated for both PSAN services (access bearer level services) and multimedia system services (session level services) (block 36).

One charging message includes information related to access bearer-level services used for transporting each media stream in the session through the packet-switched access network. That charging information may include a number of different items, non-limiting examples of which include the following: location of the mobile terminal, location of the remote host, volume of packets sent or received, quality of service parameters, and time associated with one or more of the packet access bearers used in the session. Another charging message includes information related to session-level services used for controlling multimedia services requested for the session. That information may include, for example, one or more of the following: type of multimedia service, identity of originating and terminating entities, service-based local policy restrictions, discounted charging scenarios, and an amount of time in which session resources are used.

Methods for generating and using tokens to provide end-to-end IP quality of service, manage that quality of service, support for service-based local policy enforcement on individual multimedia flows in the session, and facilitate interworking of resources owned or controlled by a packet access bearer level network with resources in the external packet data network are described in detail in co-pending, commonly-assigned applications U.S. Patent Application Serial No. _/_,_, entitled "Method and Apparatus for Coordinating Quality of Service Requirements for Media Flows in a Multimedia Session With Bearer Resources," filed on November 5, 2001; and U.S. Patent Application Serial No. _/_,_, entitled "Media Binding to Coordinate Quality of Service Requirements for Media Flows in a Multimedia Session With IP Bearer Resources," filed on November 5, 2001. The present invention describes token-related functions relating to multimedia charging for a multimedia session.

The token may take on any number of forms, some of which convey general information, like a session identifier, or more specific information. Moreover, there may be situations where it is desirable to encrypt the token to ensure that there is no tampering with charges for the multimedia session. As an example of a more general information token, an access network identifier may be included with a session identifier and/or a multimedia system charging identifier for the session may be included with the session identifier. The charging node may use the session identifier and the identifiers associated with the access network and the multimedia system to generate a bundled "session-bearer" charge for the session.

As an example of a more specific information token, media-specific tokens may be employed to permit charging correlation both on a session level and on an individual bearer level. A media-specific token for each media data stream may be generated using a session identifier and a media stream identifier corresponding to that media data stream. The media-specific token is used to correlate individual bearer level charges for each media data stream with session level charges for each media data stream.

In example implementations, the token may be generated by one or more entities in the multimedia system or by the charging entity and sent to the mobile terminal. Moreover, the mobile terminal may send the token to the access network to indicate that the mobile terminal agrees to a particular charging arrangement for the multimedia session. For example, if the mobile terminal sends the token to the charging node via the packet-switched access network, that token may be interpreted by the charging node as an indication that the mobile terminal agrees to combined charging for bearer level and session level services. If the token is not received, then the charging node may charge for bearer level and session level services for the session separately. If the token is issued by an entity associated with the home network operator of the mobile terminal, the mobile may send the token to the packet-switched access network to indicate agreement to a service level contract with the home network operator. When the token is received at the charging node, the charging node takes that fact into account in the session charge. For example, the session charge may be discounted because the user agreed to the service level contract.

In another example embodiment, if the token is issued by an entity associated with a visited network, the mobile may send the token to the PSAN to indicate agreement to service-based local policy (SBLP) enforcement of bearer services at the packet-based access network level in the visited network. Transmission of an SBLP-implemented indication token by a node in the PSAN to the charging node permits the charging node to take that fact into account in the session charge. For example, the session charge may be discounted because the mobile user agreed to SBLP.

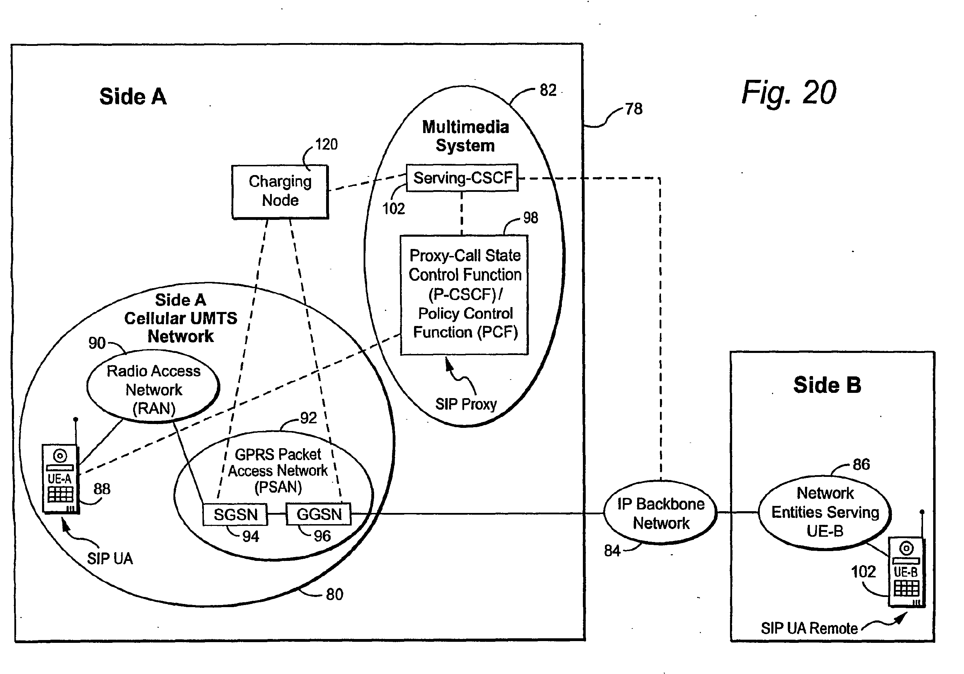

The present invention has particularly advantageous example application to multimedia sessions involving a GPRS/UMTS network. Of course, the present invention is not limited to this particular example application or to the example embodiment now described. Reference is made to the communications system shown in Fig. 20. A mobile terminal 88 is referred to in Fig. 20 as User Equipment-A (UE-A). In the context of session level signaling, e.g., the session initiation protocol (SIP), the UE-A is a SIP user agent. UE-A 88 is part of a "side A" 78 of the session and is coupled to a radio access network (RAN) 90. The RAN 90 is coupled to a GPRS network 92 which includes a serving GPRS support node (SGSN) 94 coupled to a gateway GPRS support node (GGSN) 96. The UE-A 88 desires to establish a multimedia session with a remote host 122 corresponding to UE-B which is also a SIP user agent referred to a SIP UA Remote. The solid lines in Fig. 20 show the packet data path between UE-A and UE-B in the multimedia session via the RAN 90, the SGSN 94, the GGSN 96, the IP backbone network 84, and similar RAN and GPRS entities serving UE-B represented by the side-B "bubble" 86. The dashed lines illustrate session control and charging signaling. The bubble 86 in side B also includes a multimedia system and charging node similar to what is shown for side A.

A service charging identifier in accordance with the invention is generated for a session, and it is used by a charging entity to correlate charging-related information for the session. The term service charging identifier (SCI) may encompass more than one type of charging identifier and may be generated by different entities. Typically, the SCI is generated by the S-CSCF, which is the home operator that is providing and coordinating services for the multimedia session requested by UE-A. Alternatively, the service charging identifier may be generated by the proxy-CSCF. If the UE accepts SBLP in the visited network by sending the P-CSCF-generated SCI, the GGSN may send an SBLP implemented indicator to the charging node. Recall also that the UE, the charging node, or other entities may issue an SCI related to the multimedia session.

If the service charging identifier is issued by the S-CSCF during session setup (using for example SIP signaling) to allow coordination of charging at the SIP session level and GPRS bearer level, such a service charging identifier is termed a "Home Operator Charging Identifier" (HOCI) for ease of description. The HOCI is issued by the S-CSCF when the home operator, who owns the multimedia service(s), allows service-bearer bundling of charging for a multimedia session. The HOCI is passed from the S-CSCF 102 via the P-CSCF/Policy Control Function (PCF) 98 to the UE 88 during session setup to permit coordination of charging at both the session level and the bearer level by the charging node 120 when it receives charging related messages including the HOCI. On the other hand, if the HOCI is not issued by the S-CSCF, e.g., the home network operator does not allow service-bearer bundling for service charging, charges are not correlated between the SIP session and the GPRS bearer level. Session charging and bearer charging are carried out independently.

From the perspective of the UE, the HOCI may correspond to certain advantages and/or discounts associated with bundled session-bearer charging. However, to participate in such advantages and/or discounts, the UE may have to agree to bundled charging or to some service level contract with the home operator. More specifically, if the UE sends the HOCI during PDP context activation/modification with the GGSN and the SGSN, this may be interpreted as an agreement to such condition. Upon receipt of the HOCI, the GGSN includes the HOCI in the PDP context activation/modification response message using the PDP configuration options (PCO) parameter. The SGSN may send the HOCI to the charging node 120 before the session for a pre-paid service or in real time via the GSM CAMEL interface (Ge) or off-line using call data records (CDRs) sent by the GSM Ga interface.

The charging node 120 may correspond to a home operator cost control node. As discussed above, receipt of the HOCI from the SGSN for the multimedia session may be interpreted as agreement to one or more charging arrangements including: (1) agreement to bundle charging at the session and GPRS bearer levels, (2) discounts of bearers and/or services with the home and any visited operator depending on roaming/business agreements between the home and visited networks, (3) SBLP charging arrangements, etc. On the other hand, if the HOCI is not received, traditional charging mechanisms such as those employed in current GPRS networks may be applied.

If a HOCI is issued per multimedia session, the UE and the S-CSCF may both generate a media stream-specific HOCI using a predetermined procedure, such as the examples described in the two co-pending U.S. Patent Applications referenced above. The media stream-specific HOCIs are submitted by the UE to the GGSN during PDP context activation/modification to permit correlation of each specific media stream in the session with its corresponding GPRS bearer. In addition, the PDP configuration options (PCO) parameter in PDP context activation/modification messages may be used to carry a HOCI, a media stream-specific HOCI, or a network-specific HOCI to the GGSN. The network-specific HOCI may be generated by a network node such as the GGSN in the GPRS Network along with the S-CSCF.

The proxy-CSCF may issue the SCI during SIP session setup to allow coordination of charging at a SIP session level and a GPRS bearer level. The P-CSCF issued SCI may be provided to the charging node via the S-CSCF. In addition to certain advantages and discounts associated with bundled session-bearer charging described above for the HOCI, if the service charging identifier is issued by the visited network P-CSCF, it may be used by the UE to indicate whether the UE agrees to be subjected to service-based policy (SBLP) control by the visited network operator. The UE may submit the P-CSCF-issued service charging identifier during PDP context activation/modification. Sending this SCI indicates the UE's agreement to SBLP, and the GGSN performs service-based policy control on the GPRS bearers supporting the session.

The GGSN, upon receipt of the service charging identifier from the UE, includes a "SBLP-implemented" indication or token (different from the SCI) in the PDP context activation/modification response message to the SGSN using, for example, the PDP configuration options parameter. The SGSN may then forward that SBLP-implemented indication in a real time charging message to the charging node 120. Alternatively or in addition, off-line CDRs may be sent to the charging node with the SBLP-implemented indication by the SGSN or the GGSN. The charging node 120 recognizes the SBLP-implemented indication as an agreement by the UE to service-based local policy enforcement of the GPRS bearers by the visited or serving network operator. As a result, the charging node may apply a discounted rate for SBLP-controlled bearers, depending on roaming agreements between home and visited networks, as an incentive to the UE to agree to SBLP.

Charging messages sent from different entities may contain different types of charging information related to the multimedia session. A charging message from the serving-CSCF containing the service charging identifier may relate to the nature of the call (e.g., voice, video, e-mail, etc.) and the duration. A charging message generated by the SGSN or GGSN may relate to the volume of data sent during the call and whether the UE agreed to SBLP in the visited network.

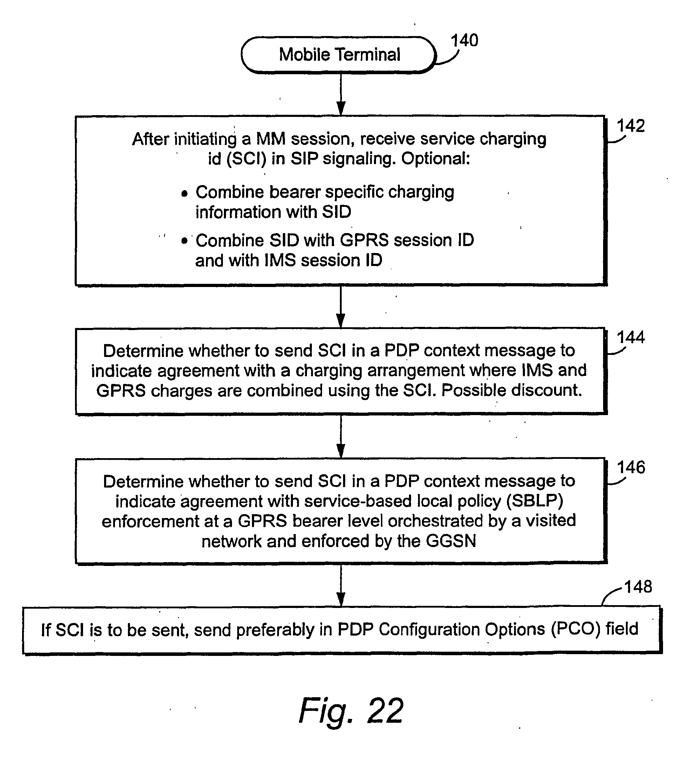

Reference is now made to flowchart routines illustrating example procedures relating to various aspects of the present invention as applied to the example environment illustrated in Fig. 20. Fig. 21 illustrates a multimedia Session Charging-GPRS Access procedures (block 130). The multimedia session is initiated using SIP signaling (block 132), and a service charging identifier (SCI) is provided to an IP-based Multimedia System (IMS) entity and to a GPRS entity (block 134). Again, the service charging identifier may be a session identifier or it may be specific to each media stream or to a GPRS/IMS entity. The charging node 120 receives charging messages from the IMS and GPRS entities, including the service charging identifier (SCI), and uses the SCI to correlate those charges related to services provided in the IMS and the GPRS network for the multimedia session (block 136).

Fig. 22 illustrates example procedures that may be implemented in the Mobile Terminal with respect to certain aspects of the present invention (block 140). After initiating the multimedia session, the mobile terminal receives a service charging identifier (SCI) in SIP signaling from a CSCF entity (the SCI maybe generated by the S-CSCF, P-CSCF , or alternatively, the charging entity). As indicated, there are multiple options for generating the SCI. The SCI may be simply assigned to identify the session, it may be specific to each bearer by combining a session identifier with media-specific information, or it may be made specific to one of the GPRS or IMS entities. In addition, the mobile terminal may optionally determine whether to send the SCI in a PDP context message to indicate agreement with a charging arrangement where IMS and GPRS charges are combined using the SCI for the session. As described above, such arrangements may also include possible discount and other service contract arrangements (block 144). In another optional embodiment, the mobile may determine whether to send the SCI in a PDP context message to indicate agreement with service-based local policy (SBLP) enforcement at a GPRS bearer level by the GGSN (block 146). In such an SBLP case, the SCI is supplied by the proxy-CSCF. In the event the SCI is sent by the UE, it is sent preferably in a PDP configurations option (PCO) field of the PDP context message (block 148).

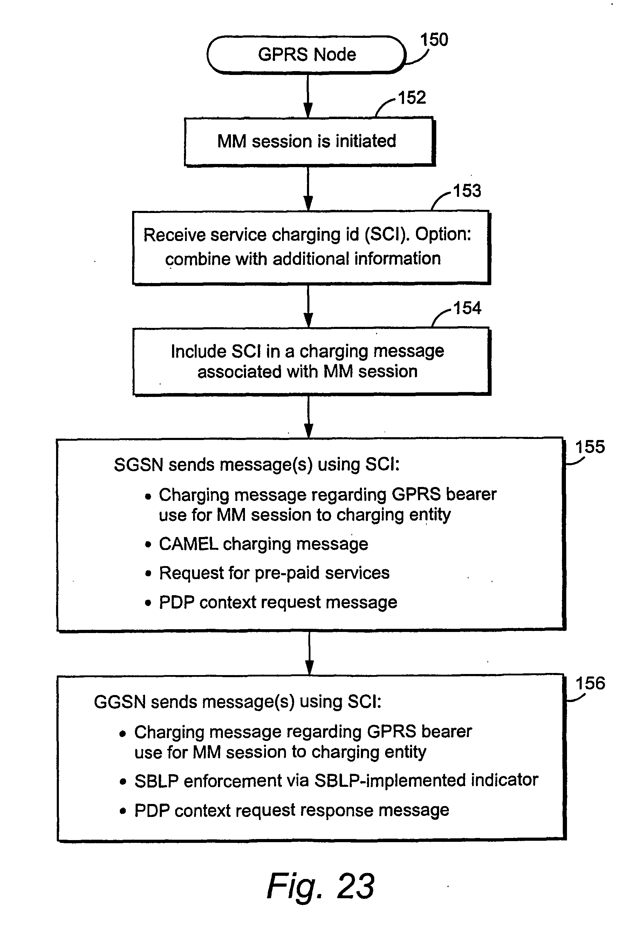

Example procedures that may be used for implementing certain aspects of the invention at a GPRS Node (block 150) are now described in the context of a flowchart illustrated in Fig. 23. After the multimedia session is initiated (block 152), a node in the GPRS network receives a service charging identifier (SCI) (generated either by the S-CSCF, P-CSCF, or charging node) from the mobile terminal (block 153). There is an option, as described above, for combining the service charging identifier with additional information that is either bearer-specific or network-specific. The SCI is included in a charging message associated with the multimedia session sent by the GPRS node to the charging node (block 154).

In one example embodiment, the GPRS node may be the SGSN which sends one or more charging messages to the charging entity 120. Such a charging message could be a CAMEL charging message and may be sent in advance of service use as, for example, in a prepaid service environment, in real time, or off-line. The SGSN includes the SCI in the PDP context request message sent to the GGSN in the GPRS network (block 155). If the GPRS node corresponds to the GGSN, the SCI may be included in a charging message regarding GPRS bearer use for the multimedia-session sent to the charging node 120 (block-156). The GGSN includes the SCI in the PDP context response message sent to the SGSN. In addition, if the sending of the SCI by the mobile terminal indicates agreement to service-based local policy, the GGSN may send an SBLP-implemented indicator to the charging node to indicate that SBLP enforcement applies for this session.

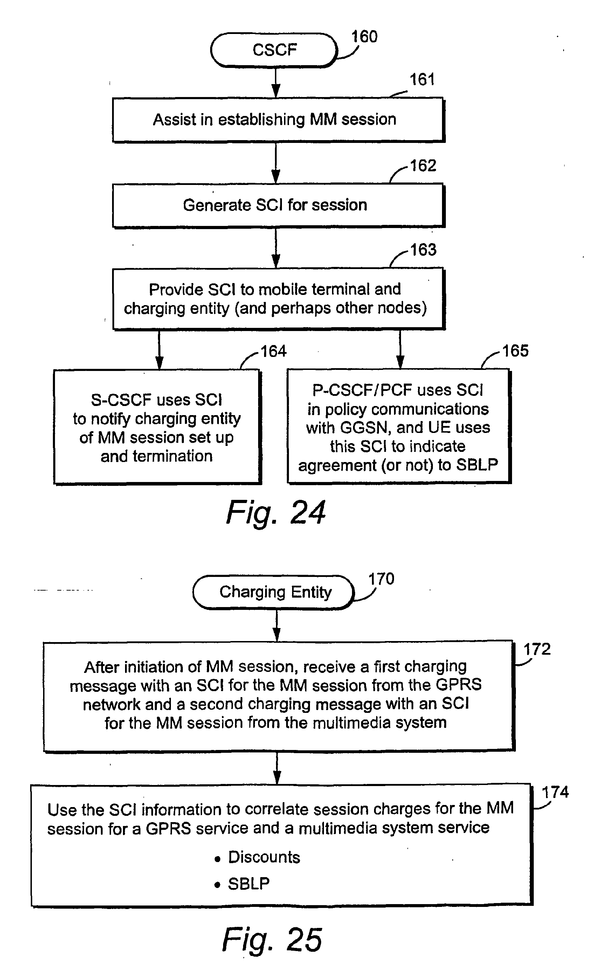

Reference is now made to Fig. 24 which illustrates example flowchart procedures that may be implemented by a Call State Control Function (CSCF) entity (block 160). The CSCF assists in establishing the multimedia session (block 161) and also may generate a service charging identifier for the multimedia session (block 162). The CSCF entity provides the SCI to the mobile terminal, to the charging entity, and perhaps to other nodes, such as the GGSN or SGSN, to permit correlation of charging messages by the charging entity for bearer level and session level services associated with a multimedia session (block 163). If the CSCF is a serving-CSCF, the SCI may be used to notify the charging entity of the multimedia session setup and termination (block 164). If the CSCF entity is a proxy-CSCF/PCF, the SCI generated may be used as a SBLP-token (as well as a service charging identifier) by the UE to indicate agreement with SBLP in the visited network as described above (block 165).

Reference is now made to the flowchart diagram illustrated in Fig. 25 setting forth example procedures relating to certain aspects of the present invention related to the Charging Entity (block 170). During initiation of a multimedia session, the charging entity may receive a may receive a service charging indicator (SCI) for the multimedia session from the S-CSCF or from the P-CSCF (e.g., via the S-CSCF). After sesssion initiation, the charging entity may receive a first charging message with the service charging indicator for the multimedia session from the GPRS network and a second charging message with the SCI for the multimedia session from the multimedia system (block 172). The charging entity uses the SCI information to correlate the session charges for the multimedia session for one or more GPRS bearer services and one or more multimedia system services. The charging entity may also use receipt of the SCI to apply certain charging discounts for this multimedia session (block 174). For SBLP, an 'SBLP-implemented indication' may be received from the GGSN (either via CAMEL interface or off line CDR's) .

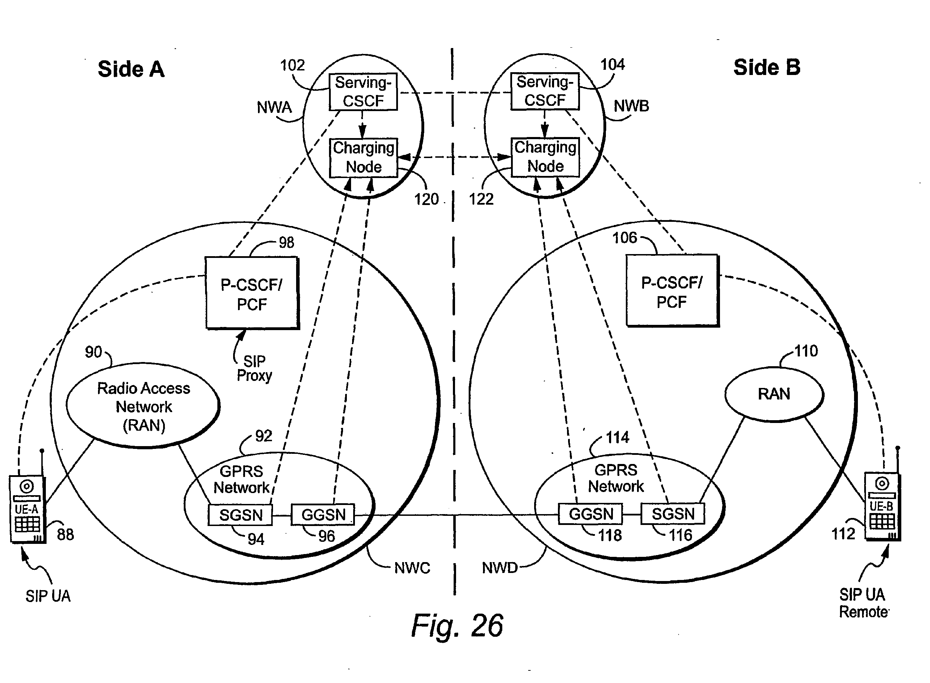

Fig. 26 shows a communications system with several different networks NWA-NWD each operated by different operators using like reference numerals from Fig. 20 (although the IP backbone network is not shown). The network NWA is UE-A's home network, and for purposes of the multimedia session between UE-A and UE-B, only the serving-CSCF 102 and a charging node 120 are shown. The network NWC is the network currently being visited by UE-A, and includes a proxy-CSCF/PCF 98. The P-CSCF/PCF 98 communicates with the serving-PSCF 102 and corresponds to a "SIP proxy" for the SIP user agent UE-A 88. The networks NWA and NWC along with UE-A 88 make up the "side-A" for the session.

The side-A charging node 120 may receive information from one or more of the SGSN 94, GGSN 96, the proxy-CSCF/PCF 98, and/or the serving-CSCF 102. The charging node 120 may be coupled to a billing system (not shown) and may be any type of charging entity configured to correlate charges for a multimedia session from multiple sources and levels using a service charging identifier included in each charging message.

The serving-CSCF provides charging node 120 with session level charges related to the multimedia session established between UE-A and UE-B using a service charging identifier (SCI). It is the home network NWA that is responsible for providing the services for the multimedia session initiated by UE-A. Such a charging message from the S-CSCF 102 may be sent, for example, formatted as a DIAMETER message.

In addition, GPRS bearer level services associated with the multimedia session may be provided by the SGSN 94 to the charging node 120 in charging messages that include the service charging identifier. The SGSN 94 may send charging related messages in real time to the charging node 120 as CDRs over the GSM "Ga" interface or as CAMEL based messages over the GSM/CAMEL "Ge" interface. Using the service charging identifier, the charging node 120 correlates the charges for different types of services and at different levels to combine them into a single charge for the multimedia session.

For sessions in which service-based local policy (SBLP) is offered by the visiting network NWC, the P-CSCF 98 may generate an SBLP-related a service charging identifier. The P-CSCF/PCF 98 communicates it to the charging node 120 and to the UE-A. If the UE-A agrees to SBLP in the visited network for the session, e.g., in exchange for a discounted charging rate for the session, it sends the SBLP SCI to the GGSN 96. A message from the GGSN 96 to the charging node 120 includes an SBLP-implemented indicator (different from the SCI) which may be used by the charging node 120 to determine charging for the session. The charging node uses the SBLP-implemented indicator to correlate the SBLP-related charging information with the session. The GGSN 96 may send SBLP charging messages off-line as one or more CDRs.

The network entities for side-B of the session mirror those described for side-A. The home network for UE-B 112 is network NWB which includes a serving-CSCSF 104 and a charging node 122. UE-B 112 is currently coupled to a visiting network NWD via RAN 110. The RAN 110 is coupled to a GPRS network 114 that includes an SGSN 116 coupled to a GGSN 118. Session traffic between UE-A and UE-B travels along the path defined by RAN 90, SGSN 94, GGSN 96, an IP backbone network (not shown), GGSN 118, SGSN 116, and RAN 110. The visited network includes a P-CSCF/PCF 106. The P-CSCF/PCF 106 is coupled to the S-CSCF 104.

The side-B charging node 122 may receive information from one or more of the SGSN 116, GGSN 118, the proxy-CSCF 106, and/or the serving-CSCF 104. The charging node 122 may be coupled to a billing system (not shown) and may be any type of charging entity configured to correlate charges for a multimedia session from multiple sources using a service charging identifier included in each charging message. The two charging nodes 120 and 122 communicate charging information regarding the session using the same service charging identifier. If there is only one charging node for the session, then all of the charging messages for the session from the side A and side B would be communicated to that charging node.

Although the description has focused on the token being sent to the mobile terminal, in another example embodiment where a calling party A has a session connected to a called party B, a common service charging identifier (token) is passed on to the packet-switched access networks and multimedia systems of both A side and B side. The common service charging identifier is used by a charging node of both sides to correlate the charges from both A and B sides. The common SCI facilitates the "A-party pays" charging model, where the originating side party A pays for the cost of the entire session just like what is available today in GSM when the terminating B-party is not roaming. Alternatively, both sides can use different/independent service charging identifiers, and the correlation of the two service charging identifiers is carried out via communication between the two charging nodes. This way the service charging identifier need not be "global" in nature which is more difficult to handle/standardize.

Furthermore, both side A and side B may use different/independent service charging identifiers, and the correlation of the two service charging identifiers is carried out via communication between the two charging nodes. This approach eliminates the need for a global SCI identifier, which might be more difficult to handle/standardize than a different SCI per side. Each side's SCI should be unique per session for one user. One way to construct these different SCIs is to combine a session identifier with UE-A identifier, (e.g., UE-A's IMSI), and the same session identifier with UE-B's identifier. As described above, the UE may add a flow identifier to differentiate between the media flows in the session. Each side's SCI may preferrably be "encrypted" (not predictable) to ensure that there is no tampering with the SCIs in an effort to avoid session charges or obtain cheaper session charges.

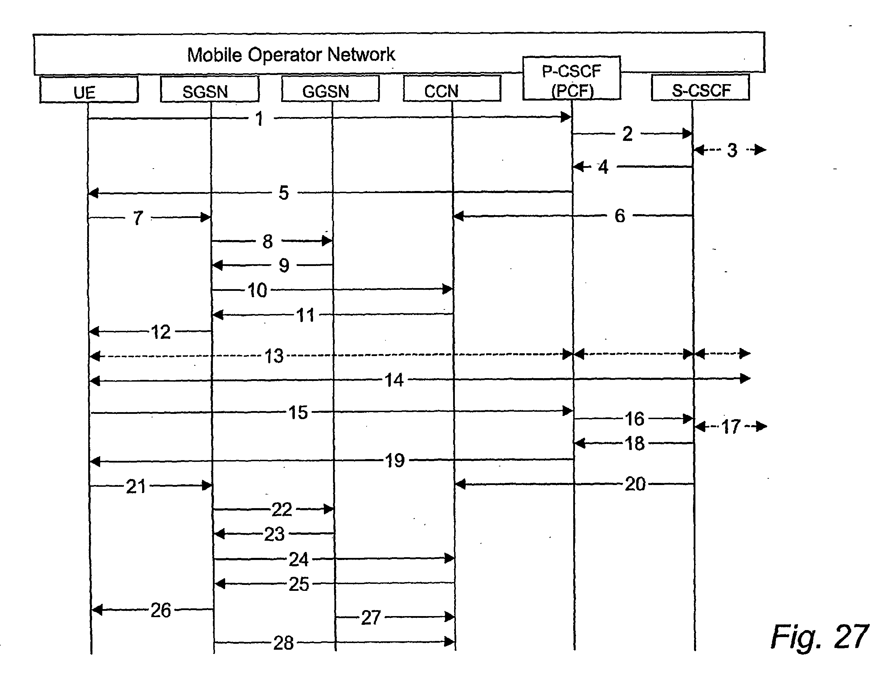

Fig. 27 provides an example signaling diagram for a multimedia session where the SCI includes a high level HOCI without any media-specific or GPRS/IMS specific information. Each signal is described briefly below by number.
1-2. SIP INVITE message from UE to P-CSCF/PCF, forwarded to S-CSCF.
3. SIP INVITE message propagated further until intended destination, (e.g., remote host). SIP 183 message comes back.
4. S-CSCF generates HOCI and includes it in SIP 183 to P-CSCF/PCF.
5. P-CSCF/PCF forwards SIP 183 with HOCI to UE.
6. S-CSCF notifies CCN of the setup of session with HOCI as common identifier.
7. UE activates PDP context, includes HOCI in PDP context message.
8. SGCN forwards PDP context request with HOCI to GGSN. Before this is done, the SGSN may also communicate with the CCN in order to check whether there is sufficient money in the prepaid account. This is also the point in time when the HOCI may be sent to the CCN in order for the CCN to decide the appropriate charging rate.
9. GGSN responds to PDP context request, includes HOCI in message.
10. SGSN forwards HOCI in CAMEL message to charging node CCN to start pre-paid/hot billing services. This step may be omitted if this was done earlier in step 8.
11. CCN confirms receipt of HOCI.
12. SGSN completes PDP context activation and responds to UE.
13. The rest of SIP interactions continue which completes the session setup.
14. Media starts flowing from UE to remote destination.
15. The UE decides to terminate the session. SIP "Bye" message is sent to P-CSCF/PCF.
16-18. SIP "Bye" propagated further until intended destination, SIP OK message comes back.
19. P-CSCF/PCF forwards SIP OK to UE.
20. S-CSCF notifies CCN of the termination of session with HOCI as common identifier.
21-22. UE deactivates PDP context, request propagated to GGSN.
23. GGSN responds to PDP deactivation request.
24. SGSN notifies CCN of deactivation of PDP context, using HOCI as common identifier.
25. CCN confirms deactivation of PDP context.
26. PDP deactivation successfully propagated to UE.
27-28. The GGSN and SGSN forward CDRs to CCN, using the HOCI as identifier.

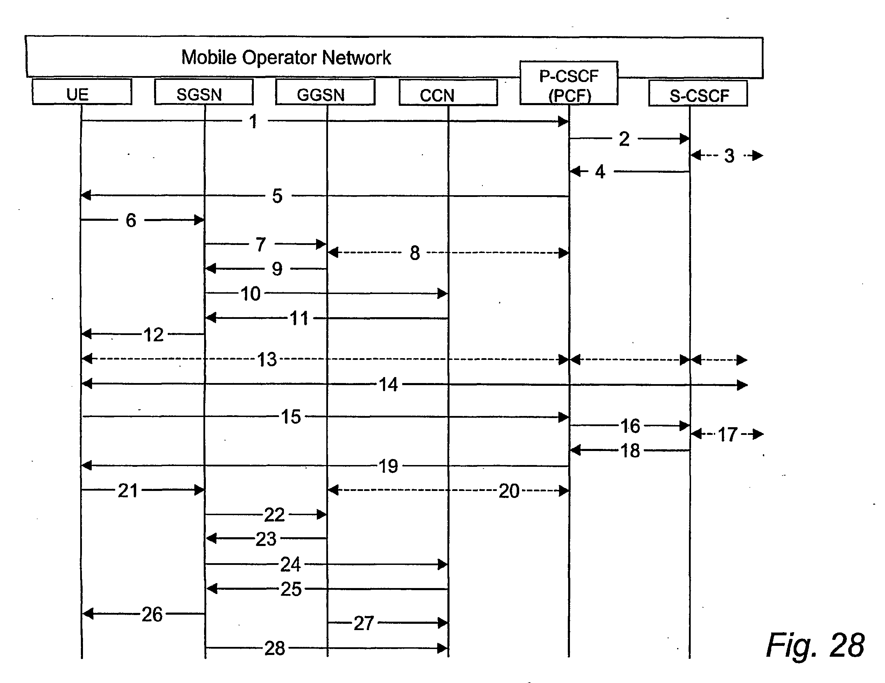

Fig. 28 illustrates an example signaling flow where the service charging identifier includes SBLP information. The numbered signal flows are explained below.
1-2. SIP INVITE message from UE to P-CSCF/PCF, forwarded to S-CSCF.
3-4. SIP INVITE message propagated further until intended destination, (e.g., remote host). SIP 183 message comes back.
5. P-CSCF/PCF generates SBLP SCI, and includes it in SIP 183 to UE.
6. UE activates PDP context, includes SBLP SCI in PDP context message.
7. SGSN forwards PDP context request with SBLP SCI to GGSN.
8. SBLP-related exchanges with GGSN take place, using SBLP SCI as identifier. SBLP implemented in GGSN.
9. GGSN responds to PDP context request, includes 'SBLP implemented' indication
10. GGSN forwards `SBLP implemented' indication in CAMEL message to CNN to start pre-paid/hot billing services.
11. CCN confirms receipt of 'SBLP implemented' indication.
12. SGSN completes PDP context activation and responds to UE.
13. The rest of SIP interactions continue which completes the session setup.
14. Media starts flowing from UE to remote destination.
15. The UE decides to terminate the session. SIP "Bye" is sent to P-CSCF/PCF. -
16-19. SIP "Bye" propagated further until intended destination, SIP OK comes back to UE.
20. SBLP-exchanges with GGSN take place to de-authorize the use of bearers.
21-23. UE deactivates PDP context, request propagated to GGSN, GGSN responds to PDP deactivation request.
24. SCSN notifies CCN of deactivation of PDP context.
25. CCN confirms deactivation of PDP context.
26. PDP deactivation successfully propagated to UE.
27-28. The GGSN and SGSN forward CDRs to CCN, with the 'SBLP implemented' indication.

While the present invention has been described with respect to particular embodiments, those skilled in the art will recognize that the present invention is not limited to these specific exemplary embodiments. Different formats, embodiments, and adaptations besides those shown and described as well as many variations, modifications, and equivalent arrangements may also be used to implement the invention. Therefore, while the present invention has been described in relation to its preferred embodiments, it is to be understood that this disclosure is only illustrative and exemplary of the present invention. Accordingly, it is intended that the invention be limited only by the scope of the claims appended hereto.

## Claims

1. A method for charging a multimedia session established between a mobile terminal and a remote host, wherein the multimedia session between the mobile terminal and the remote host is established over a radio access network via a packet-switched access network coupled to a multimedia system, having one or more multimedia servers for providing multimedia services for multimedia sessions; **characterised by** the further steps of
generating a token including a session identifier associated with the multimedia session; and using the token, correlating session charges for a first operation performed in the packet-switched access network associated with the multimedia session and for a second operation performed in the multimedia system associated with the multimedia session.

2. The method in claim 1, further comprising:
a first entity in the packet-switched access network including the token in a first charging message associated with the session sent to a charging entity; and
a second entity in the multimedia system including the token in a second charging message associated with the session sent to the charging entity,
wherein the charging entity performs the correlating step.

3. The method in claim 2, wherein the first and second charging messages correspond to first and second call data records.

4. The method in claim 2, wherein the first charging message includes information related to bearer services used in the packet-switched access network for the session.

5. The method in claim 4, wherein the information includes access bearer-specific charging information for one or more access bearers used in the session.

6. The method in claim 5, wherein the information includes one or more of the following: location of the mobile terminal, location of the remote host, volume of packets sent or received, time, and quality of service parameters associated with one or more of the packet access bearers used in the session.

7. The method in claim 2, wherein the second charging message includes information related to services used in the multimedia system for the session.

8. The method in claim 7, wherein the information includes one or more of the following: type of multimedia service, identity of originating and terminating entities, service based local policy restrictions, discounted charging scenarios, and amount of time in which session resources are used.

9. The method in claim 2, the method further comprising:
sending in the first charging message the session identifier and an access network charging identity for the session to the charging entity, and
sending in the second charging message the session identifier and a multimedia system charging identity for the session to the charging entity,
wherein the charging node uses the session identifier and charging identities in the first and second charging messages to generate a charge for the session.

10. The method in claim 1, further comprising:
using the token to indicate whether a charging discount applies to the session.

11. The method in claim 1, wherein the token is generated by an entity in the multimedia system, the method further comprising:
sending the token from the entity to the mobile terminal.

12. The method in claim 11, wherein if the mobile terminal sends the token to the packet-switched access network, the mobile terminal indicates agreement to charging for the multimedia session where bearer level and session level services for the session are combined.

13. The method in claim 12, wherein if the mobile terminal does not send the token to the packet-switched access network, the mobile terminal indicates at decision not to agree to charging for the multimedia session where bearer level and session level services for the session are combined.

14. The method in claim 11, wherein the entity is associated with a home network operator of the mobile terminal, and wherein by sending the token to the packet-switched access network, the mobile terminal indicates agreement to a service level contract with the home network operator.

15. The method in claim 11, wherein the entity is associated with a visited network, and wherein by sending the token to the packet-switched access network, the mobile terminal indicates agreement to service-based local policy (SBLP) enforcement of bearer services at the packet-based access network level in the visited network.

16. The method in claim 1, wherein the first operation is a bearer level service related to transporting each media stream in the session through the packet-switched access network.

17. The method in claim 1, wherein the second operation is a session level service relating to setting up or controlling multimedia services requested for the session.

18. The method in claim 1, wherein if the token is not used, bearer level and session level services associated with the session are charged for separately.

19. The method in claim 1, wherein the token includes a session identifier, the method further comprising:
generating a complete token for each media data stream using the session identifier and a media stream identifier corresponding to that media data stream,
wherein the complete token is used to correlate bearer level charges for each media data stream with session level charges for each media data stream.

20. The method in claim 1, wherein the token is encrypted.

21. The method in claim 1, wherein the token is sent to the mobile terminal and the remote host.

22. The method in claim 1, further comprising:
generating first and second different tokens associated with the multimedia session, the first token being associated with the mobile terminal and the second token being associated with the remote host.

23. The method in claim 22, further comprising:
using the first and second tokens, correlating session charges,

24. The method in claim 1, further comprising:
using the token to correlate the charges in the multimedia session in an A-party pays charging model.

25. A method according to claim 1, wherein
session level signaling is used, the multimedia session is initiated with plural media data streams between the mobile terminal and a remote host coupled to the mobile terminal being coupled to an IP-based multimedia system (IMS) that provides multimedia session services by way of a General Packet Radio Service (GPRS) network;
a service charging identifier corresponding to the session is generated, and
charges related to operations is performed in the IMS and the GPRS network associated with the session are correlated by using the service charging identifier.

26. The method in claim 25, wherein a call service control function (CSCF)
entity in the IMS generates the service charging identifier and sends it to the mobile terminal.

27. The method in claim 26, wherein the CSCF entity is a serving-CSCF entity (S-CSCF) associated with a home network for the mobile terminal.

28. The method in claim 27, wherein if the mobile terminal sends the service charging identifier to the GPRS network, the mobile terminal indicates agreement to combined charging of both bearer level and session level services for the multimedia session.

29. The method in claim 28, wherein if the mobile terminal does not send the token to the GPRS network, the mobile terminal indicates a decision not to agree to the combined charging for the multimedia session.

30. The method in claim 28, wherein by sending the service charging identifier to the GPRS network, the mobile terminal indicates agreement to a service level contract with a home network operator of the mobile terminal.

31. The method in claim 26, wherein the CSCF entity is a proxy-CSCF entity (P-CSCF) associated with a network visited by the mobile terminal.

32. The method in claim 31, wherein by sending the service charging identifier to the GPRS network, the mobile terminal indicates agreement to service-based local policy (SBLP) enforcement of bearer services at the GPRS network level based on policy information for the session provided by the P-CSCF/PCF to a gate keeper node in the GPRS network.

33. The method in claim 32, wherein the gatekeeper includes an SBLP-implemented indicator in a charging message related to the multimedia session sent to a charging node.

34. The method in claim 26, wherein the mobile terminal includes the service charging identifier in a packet data protocol (PDF) context message sent to a node in the GPRS network.

35. The method in claim 34, wherein the service charging identifier is included in a PDP configuration options (PCO) field.

36. The method in claim 34, wherein the GPRS node is a serving GPRS support node (SGSN).

37. The method in claim 36, wherein the SGSN sends the service charging identifier with charging information to a home network cost control node.

38. The method in claim 36, wherein the home network cost control node performs real time charging or prepaid charging.

39. The method in claim 36, wherein the SGSN sends the service charging identifier with charging information over a CAMEL interface in real time or before the session begins.

40. The method in claim 36, wherein the SGSN sends the service charging identifier with charging information in a call data record (CDR) to charging node after the session ends.

41. The method in claim 34, wherein a gateway GPRS support node (GGSN) sends the service charging identifier hi a PDP context response message or with charging information via a CDR for off-line charging to a charging node.

42. The method in claim 34, wherein if the mobile terminal agrees to service based local policy enforcement, the GGSN sends a SBLP-implemented indication in a PDP context response message or with charging information via a CDR for off-line charging to a charging node

43. The method in claim 26, further comprising:
a GPRS entity including the service charging identifier in a first charging message associated with the session to a charging entity; and
an IMS entity including the service charging identifier in a second charging message associated with the session to the charging entity,
wherein the charging entity performs the correlating step.

44. The method in claim 43, wherein the first and second charging messages correspond to first and second call data records.

45. The method in claim 43, wherein the first charging message corresponds to a CAMEL charging message and the second charging message corresponds to a DIAMETER charging message.

46. The method in claim 43, wherein the first charging message includes information related to GPRS bearer services used in the GPRS network for the session.

47. The method in claim 46, wherein the information includes GPRS bearer-specific charging information for one or more GPRS bearers used in the session.

48. The method in claim 47, wherein the information includes one or more of the following: location of the mobile terminal, location of the remote host, volume of packets sent or received, a quality of service parameter, and time, associated with one or more of the GPRS bearers used in the session.

49. The method in claim 43, wherein the second charging message includes information related to services used in the IMS for the session.

50. The method in claim 49, wherein the information includes one or more of the following: type of multimedia level service used, identity of originating and terminal entities, service based local policy restrictions, discounted charging scenarios, and amount of time in which session resources are used.

51. The method in claim 43, further comprising:
sending in the first charging message the service charging identifier and a GPRS network charging identity for the session to the charging entity,
sending in the second charging message the service charging identifier and an IMS charging identity for the session to the charging entity,
wherein the charging entity uses the service charging identifier and the GPRS and IMS charging identities to generate a charge for the session.

52. The method in claim 43, further comprising:
using the service charging identifier to indicate to the charging entity whether a charging discount applies to the session.

53. A mobile terminal suitable for setting up a multimedia session between the mobile terminal and a remote host using session signaling, where the multimedia session includes plural media data streams, the mobile terminal being coupled to a multimedia system that provides multimedia session services, the mobile terminal comprising electronic circuitry configured to perform the following tasks:
initiate the multimedia session using session signaling so that a plurality of media packet access bearers can be established over a packet-switched access network to transport corresponding ones of the media data streams between the mobile terminal and the access point;
receive a service charging identifier;
determining whether to send the service charging identifier in a packet context message to be sent to the packet-switched access network,
wherein sending the service charging identifier in the packet context message indicates an agreement by the mobile terminal to a charging arrangement that correlates session charges associated with the multimedia session for a first operation performed in the packet-switched access network associated with the multimedia session and for a second operation performed in the multimedia system associated with the multimedia session and wherein not sending the session charging identifier in the packet context message indicates that the mobile terminal does not agree to the charging arrangement.

54. The mobile terminal in claim 53, wherein the session charges include charges for a first operation performed by the packet-switched access network and for a second operation performed by the multimedia system

55. The mobile terminal claim 54, wherein the electronic circuitry is configured to indicate agreement to a discount charging arrangement for a combined charge for the first and second operation by sending the service charging identifier in the packet context message.

56. The mobile terminal claim 54, wherein the electronic circuitry is configured to indicate agreement to service-based local policy enforcement at an access bearer level orchestrated by a visiting network and enforced by a gate keeper node in the packet-switched access network by sending the service charging identifier in the packet context message.

57. The mobile terminal in claim 54, wherein the packet-switched access network is a GPRS network and the multimedia system is an IP-based multimedia system (IMS) that provides multimedia session services by way of GPRS bearers, and wherein the packet context message is a PDP context activation message.

58. The mobile terminal in claim 57, wherein the service charging identifier is included in a PDP configuration options (PCO) field in the PDP context activation message.

59. The mobile terminal in claim 54, wherein the electronic circuitry is configured to combine the service charging identifier with a media stream identifier.

60. A node in a packet-switched access network coupled to a radio access network and to a multimedia system for providing services in a multimedia session between a mobile terminal and a remote host, where in response to a multimedia session request from the mobile terminal, a multimedia session is established involving the mobile terminal that includes a plurality of media data streams including establishing a plurality of media packet access bearers between the mobile terminal and the access point, the media packet access bearers transporting corresponding ones of the media data streams over the packet-switched access network, comprising electronic circuitry configured to perform the following tasks:
receive a service charging identifier;
include the service charging identifier in a charging message associated with the multimedia session; and
send the service charging message with the session charging identifier to a charging entity.

61. The packet-switched access network node in claim 60, wherein the electronic circuitry is configured to combine the service charging identifier with additional information.

62. The packet-switched access network node in claim 61, wherein the additional information includes a network identifier associated with the multimedia session.

63. The packet-switched access network node in claim 60, wherein the packet-switched access network is a GPRS network and the packet-switched access network node is an SGSN, the electronic circuitry in the SGSN being configured to:
receive a PDF context message from, the mobile terminal which includes .the service charging identifier, and
forward the service charging identifier in a PDF context request message to a GGSN.

64. The packet-switched access network node in claim 60, wherein the packet-switched access network is a GPRS network and the packet-switched access network node is an SGSN, the electronic circuitry in the SGSN being configured to:
receive a PDP context message from the mobile terminal which includes the service charging identifier, and
forward the service charging identifier to the charging entity in a charging message.

65. The packet-switched access network node in claim 64, wherein the charging message is a CAMEL message sent in real time.

66. The packet-switched access network node in claim 64, wherein the charging message is a request for pre-paid services associated with the multimedia session.

67. The packet-switched access network node in claim 60, wherein the packet-switched access network is a GPRS network and the packet-switched access network node is an GGSN, the electronic circuitry in the GGSN being configured to:
receive a PDP context request message which includes the service charging identifier, and
respond to the PDP context request message including the service charging identifier.

68. The packet-switched access network node in claim 60, wherein the packet-switched access network is a GPRS network and the packet-switched access network node is an GGSN, the electronic circuitry in the GGSN being configured to:
implement service-based local policy for the multimedia session using the service charging identifier, and
send a charging message indicating implementation of the service-based local policy for the multimedia session.

69. The packet-switched access network node in claim 60, wherein the packet-switched access network is a GPRS network and the packet-switched access network node is an GGSN, the electronic circuitry in the GGSN being configured to send a charging message to a charging entity associated with the multimedia session and including the service charging identifier so that the charging entity may correlate GPRS bearer level service charges with session level charges for the multimedia session.

70. A multimedia service controller for setting up a multimedia session between a mobile terminal and a remote host using session signaling, where the multimedia session includes plural media data streams, the mobile terminal being coupled to packet-switched access network and to a multimedia system that provides multimedia session services, a multimedia service controller comprising:
electronic circuitry configured to provide to the mobile terminal and to a charging entity a service charging identifier associated with the multimedia session,
wherein the charging entity uses the service charging identifier to correlate session charges associated with the multimedia session for a packet-switched access network service including a first operation performed in the packet-switched access network associated with the multimedia session and for a multimedia system service including a second operation performed in the multimedia system associated with the multimedia session.

71. The multimedia service controller in claim 70, wherein the packet-switched access network service is a bearer level service and the multimedia system service is a session level service.

72. The multimedia service controller in claim 70, wherein the multimedia service controller is a serving-multimedia service controller associated with a home network operator of the mobile terminal.

73. The multimedia service controller in claim 72, wherein the serving multimedia service controller uses the service charging identifier to notify the charging entity of the set up and termination of the multimedia session.

74. The multimedia service controller in claim 70, wherein the multimedia service controller is a proxy-multimedia service controller associated with a network visited by the mobile terminal.

75. The multimedia service controller in claim 74, wherein the proxy-multimedia service controller uses the service charging identifier in policy related communications with a policy control function in the multimedia system and a gate keeper in the packet-switched access network.

76. A charging controller suitable for correlating session charges in a multimedia session between a mobile terminal and a remote host using session signaling, where the multimedia session includes plural media data streams, the mobile terminal being coupled to packet-switched access network and to a multimedia system that provides multimedia session services, a charging controller comprising electronic circuitry configured to perform the following tasks:
receive a first charging message with a service charging identifier associated with the multimedia session from the packet-switched access network;
receive a second charging message with the service charging identifier from the multimedia system; and
use the service charging identifier to correlate session charges associated with the multimedia session for a packet-switched access network service including a first operation performed in the packet-switched access network associated with the multimedia session and for a multimedia system service including a second operation performed in the multimedia system associated with the multimedia session.

77. The charging controller in claim 76, wherein the first and second charging messages are call data records.

78. The charging controller in claim 76, wherein the first charging message is a CAMEL message and the second charging message is a DIAMETER message.

79. The charging controller in claim 76, wherein the electronic circuitry is configured to generate a combined service charge for the multimedia session that combines charges for the packet-switched access network service and the multimedia system service into one charge for the session.

80. The charging controller in claim 79, wherein the electronic circuitry is configured to provide discounted charges for the session when, the mobile terminal agrees to combined charges.

81. The charging controller in claim 79, wherein the electronic circuitry is configured to provide discounted charges for the session when the mobile terminal agrees to a service contract associated with a home network of the mobile terminal.

82. The charging controller in claim 79, wherein the electronic circuitry is configured to account for a service based local policy implemented message received from the packet switched access network in a session charge.

83. The charging controller in claim 79, wherein the sendee identifier identifies the multimedia session and the one of the packet-switched access network and the multimedia system entity that sent the first or second charging message, respectively.

84. The charging controller in claim 76, wherein the service charging identifier is used to correlate session charges for an A-party pays charging model.

85. The charging controller in claim 76, wherein an A-side of the session includes the mobile terminal, the packet-switched access network, the multimedia system, and the charging controller, and a B-side of the session includes similar entities, wherein an A-side service charging identifier is used to correlate session charges for the A-side and a B-side service charging identifier is used to correlate session charges for the B-side, and wherein the A-side charging controller and the B-side charging controller communicate charging information for the session to generate a session charge.

## Patentansprüche

1. Verfahren zum Abrechnen einer Multimediasession, die zwischen einem mobilen Endgerät und einem entfernten Host eingerichtet ist, wobei die Multimediasession zwischen dem mobilen Endgerät und dem entfernten Host über ein Funk-Zugangsnetzwerk über ein paketgeschaltetes Zugangsnetzwerk eingerichtet ist, das mit einem Multimediasystem gekoppelt ist, das einen oder mehrere Multimedia-Server zum Liefern von Multimediadiensten für Multimediasessions hat; **gekennzeichnet durch** die weiteren Schritte eines
Erzeugens eines Tokens mit einem Session-Identfizierer, der zu der Multimediasession gehört; und unter Verwendung des Tokens eines Korrelierens von Sessionabrechnungen für einen ersten Betrieb, der in dem paketgeschalteten Zugangsnetzwerk durchgeführt wird, das zu der Multimediasession gehört, und für einen zweiten Betrieb, der in dem Multimediasystem durchgeführt wird, das zu der Multimediasession gehört.

2. Verfahren nach Anspruch 1, das weiterhin folgendes aufweist:
eine erste Einheit in dem paketgeschalteten Zugangsnetzwerk mit dem Token in der ersten Abrechnungsmeldung, die zu der Session gehört, die zu der Abrechnungseinheit gesendet ist; und
eine zweite Einheit in dem Multimediasystem mit dem Token in einer zweiten Abrechnungsmeldung, die zu der Session gehört, die zu der Abrechnungseinheit gesendet ist,
wobei die Abrechnungseinheit den Korrelierschritt durchführt.

3. Verfahren nach Anspruch 2, wobei die erste und die zweite Abrechnungsmeldung einer ersten und einer zweiten Anrufdatenaufzeichnung entsprechen.

4. Verfahren nach Anspruch 2, wobei die erste Abrechnungsmeldung Information in Bezug Trägerdienste enthält, die in dem paketgeschalteten Zugangsnetzwerk für die Session verwendet sind.

5. Verfahren nach Anspruch 4, wobei die Information zugangsträgerspezifische Abrechnungsinformation für einen oder mehrere Zugangsträger enthält, die in der Session verwendet sind.

6. Verfahren nach Anspruch 5, wobei die Information eines oder mehreres von dem Folgenden enthält: eine Lokalisierung des mobilen Endgeräts, eine Lokalisierung des entfernten Hosts, ein Ausmaß an gesendeten oder empfangenen Paketen, eine Zeit und Dienstqualitätsparameter, die zu einem oder mehreren der Paketzugangsträger gehören, die in der Session verwendet sind.

7. Verfahren nach Anspruch 2, wobei die zweite Abrechnungsmeldung Information in Bezug auf Dienste enthält, die in dem Multimediasystem für die Session verwendet sind.

8. Verfahren nach Anspruch 7, wobei die Information eines oder mehreres von dem Folgenden enthält: einen Typ eines Multimediadienstes, eine Identität von Ursprungs- und Beendigungseinheiten, dienstbasierende lokale (absatz-)politische bzw. taktische Beschränkungen, Szenarien für diskontierte Abrechnungen und eine Menge an Zeit, in welcher Session-Ressourcen verwendet sind.

9. Verfahren nach Anspruch 2, wobei das Verfahren weiterhin folgendes aufweist:
Senden, in der ersten Abrechnungsmeldung, des Session-Identifizierers und einer Zugangsnetzwerk-Abrechnungsidentität für die Session zu der Abrechnungseinheit, und
Senden, in der zweiten Abrechnungsmeldung, des Sessions-Identifizierer und einer Multimediasystem-Abrechnungsidentität für die Session zu der Abrechnungseinheit,
wobei der Abrechnungsknoten den Session-Identifizierer und die Abrechnungsidentitäten in der ersten und der zweiten Abrechnungsmeldung zum Erzeugen einer Abrechnung für die Session verwendet.

10. Verfahren nach Anspruch 1, das weiterhin folgendes aufweist:
Verwenden des Tokens zum Anzeigen, ob eine Abrechnungsdiskontierung für die Session gilt.

11. Verfahren nach Anspruch 1, wobei der Token durch eine Einheit in dem Multimediasystem erzeugt wird, wobei das Verfahren weiterhin folgendes aufweist:
Senden des Tokens von der Einheit zu dem mobilen Endgerät.

12. Verfahren nach Anspruch 11, wobei dann, wenn das mobile Endgerät den Token zu dem paketgeschalteten Zugangsnetzwerk sendet, das mobile Endgerät eine Zustimmung zu einer Abrechnung für die Multimediasession anzeigt, wo Dienste einer Trägerebene und einer Sessionebene für die Session kombiniert sind.

13. Verfahren nach Anspruch 12, wobei dann, wenn das mobile Endgerät den Token nicht zu dem paketgeschalteten Zugangsnetzwerk sendet, das mobile Endgerät eine Entscheidung anzeigt, einer Abrechnung für die Multimediasession nicht zuzustimmen, wo Dienste einer Trägerebene und einer Sessionebene für die Session kombiniert sind.

14. Verfahren nach Anspruch 11, wobei die Einheit mit einem Heimnetzwerkbetreiber des mobilen Endgeräts verbunden ist und wobei durch Senden des Tokens zu dem paketgeschalteten Zugangsnetzwerk das mobile Endgerät eine Zustimmung zu einem Vertrag auf Dienstebene mit dem Heimnetzwerkbetreiber anzeigt.

15. Verfahren nach Anspruch 11, wobei die Einheit mit einem besuchten Netzwerk verbunden ist und wobei durch Senden des Tokens zu dem paketgeschalteten Zugangsnetzwerk das mobile Endgerät eine Zustimmung zu einer dienstbasierten lokalen (absatz-)politischen (SBLP) Geltendmachung von Trägerdiensten auf der Ebene des paketbasierenden Zugangsnetzwerks im besuchten Netzwerk anzeigt.

16. Verfahren nach Anspruch 1, wobei der erste Betrieb ein Dienst auf Trägerebene in Bezug auf ein Transportieren eines jeweiligen Medienstroms in der Session durch das paketgeschaltete Zugangsnetzwerk ist.

17. Verfahren nach Anspruch 1, wobei der zweite Betrieb ein Dienst auf Sessionebene in Bezug auf ein Aufbauen oder Steuern von Multimediadiensten ist, die für die Session angefordert sind.

18. Verfahren nach Anspruch 1, wobei dann, wenn der Token nicht verwendet wird, Dienste auf Trägerebene und auf Sessionebene, die zu der Session gehören, separat abgerechnet werden.

19. Verfahren nach Anspruch 1, wobei der Token einen Session-Identifizierer enthält, wobei das Verfahren weiterhin folgendes aufweist:
Erzeugen eines vollständigen Tokens für jeden Mediendatenstrom unter Verwendung des Session-Identifizierers und eines Medienstrom-Identifizierers entsprechend diesem Mediendatenstrom,
wobei der vollständige Token zum Korrelieren von Abrechnungen auf Trägerebene für jeden Mediendatenstrom mit Abrechnungen auf Sessionebene für jeden Mediendatenstrom verwendet wird.

20. Verfahren nach Anspruch 1, wobei der Token verschlüsselt ist.

21. Verfahren nach Anspruch 1, wobei der Token zu dem mobilen Endgerät und dem entfernten Host gesendet wird.

22. Verfahren nach Anspruch 1, das weiterhin folgendes aufweist:
Erzeugen eines ersten und eines zweiten anderen Tokens, die zu der Multimediasession gehören, wobei der erste Token zu dem mobilen Endgerät gehört und der zweite Token zu dem entfernten Host gehört.

23. Verfahren nach Anspruch 22, das weiterhin folgendes aufweist:
unter Verwendung des ersten und des zweiten Tokens Korrelieren von Sessionabrechnungen.

24. Verfahren nach Anspruch 1, das weiterhin folgendes aufweist:
Verwenden des Tokens zum Korrelieren der Abrechnungen in der Multimediasession in einem Modell, bei welchem eine A-Partei eine Rechnung bezahlt.

25. Verfahren nach Anspruch 1, wobei
eine Signalgabe auf Sessionebene verwendet wird, die Multimediasession mit mehreren Mediendatenströmen zwischen dem mobilen Endgerät und einem entfernten Host initiiert wird, der mit dem mobilen Endgerät gekoppelt ist, das mit einem auf IP basierenden Multimediasystem (IMS) gekoppelt ist, das Multimediasessiondienste mittels eines Netzwerks für einen allgemeinen Paketfunkdienst (GPRS) liefert;
ein Dienstabrechnungs-Identifizierer entsprechend der Session erzeugt wird, und
Abrechnungen in Bezug auf Operationen, die im IMS durchgeführt sind, und das zu der Session gehörende GPRS-Netzwerk durch Verwenden des Dienstabrechnungs-Identifizierers korreliert werden.

26. Verfahren nach Anspruch 25, wobei eine Anrufdienst-Steuerfunktion-(CSCF-)Einheit in dem IMS den Dienstabrechnungs-Identifizierer erzeugt und ihn zu dem mobilen Endgerät sendet.

27. Verfahren nach Anspruch 26, wobei die CSCF-Einheit eine dienende CSCF-Einheit (S-CSCF) ist, die zu einem Heimnetzwerk für das mobile Endgerät gehört.

28. Verfahren nach Anspruch 27, wobei dann, wenn das mobile Endgerät den Dienstabrechnungs-Identifizierer zu dem GPRS-Netzwerk sendet, das mobile Endgerät eine Zustimmung zu einer kombinierten Abrechnung von Diensten auf sowohl einer Trägerebene als auch einer Sessionebene für die Multimediasession anzeigt.

29. Verfahren nach Anspruch 28, wobei dann, wenn das mobile Endgerät den Token nicht zu dem GPRS-Netzwerk sendet, das mobile Endgerät eine Entscheidung anzeigt, der kombinierten Abrechnung für die Multimediasession nicht zuzustimmen.

30. Verfahren nach Anspruch 28, wobei durch Senden des Dienstabrechnungs-Identifizierers zu dem GPRS-Netzwerk das mobile Endgerät eine Zustimmung zu einem Vertrag auf Dienstebene mit einem Heimnetzwerkbetreiber des mobilen Endgeräts anzeigt.

31. Verfahren nach Anspruch 26, wobei die CSCF-Einheit eine Proxy-CSCF-Einheit (P-CSCF) ist, die zu einem Netzwerk gehört, das durch das mobile Endgerät besucht ist.

32. Verfahren nach Anspruch 31, wobei durch Senden des Dienstabrechnungs-Identifizierers zu dem GPRS-Netzwerk das mobile Endgerät eine Zustimmung zu einer dienstbasierenden lokalen (absatz-)politischen (SBLP) Geltendmachung von Trägerdiensten auf der GPRS-Netzwerkebene basierend auf (absatz-)politischer Information für die durch P-CSCF/PCF gelieferte Session zu einem Gate-Halterknoten in dem GPRS-Netzwerk anzeigt.

33. Verfahren nach Anspruch 32, wobei der Gatekeeper einen SBLP-implementierten Indikator in einer Abrechnungsmeldung in Bezug auf die zu einem Abrechnungsknoten gesendete Multimediasession enthält.

34. Verfahren nach Anspruch 26, wobei das mobile Endgerät den Dienstabrechnungs-Identifizierer in einer Paketdatenprotokoll-(PDF-)Kontextmeldung enthält, die zu einem Knoten im GPRS-Netzwerk gesendet ist.

35. Verfahren nach Anspruch 34, wobei der Dienstabrechnungs-Identifizierer in einem Feld für PDP-Konfigurationsoptionen (PCO) enthalten ist.

36. Verfahren nach Anspruch 34, wobei der GPRS-Knoten ein dienender GPRS-Unterstützungsknoten (SGSN) ist.

37. Verfahren nach Anspruch 36, wobei der SGSN den Dienstabrechnungs-Identifizierer mit Abrechnungsinformation zu einem Heimnetzwerk-Kostensteuerknoten sendet.

38. Verfahren nach Anspruch 36, wobei der Heimnetzwerk-Kostensteuerknoten eine Echtzeitabrechnung oder eine im Voraus bezahlte Abrechnung durchführt.

39. Verfahren nach Anspruch 36, wobei der SGSN den Dienstabrechnungs-Identifizierer mit Abrechnungsinformation über eine CAMEL-Schnittstelle in Echtzeit oder vor einem Beginn der Session sendet.

40. Verfahren nach Anspruch 36, wobei der SGSN den Dienstabrechnungs-Identifizierer mit Abrechnungsinformation in einer Anrufdatenaufzeichnung (CDR) zu einem Abrechnungsknoten sendet, nachdem die Session endet.

41. Verfahren nach Anspruch 34, wobei ein Gateway-GPRS-Unterstützungsknoten (GGSN) den Dienstabrechnungs-Identifizierer in einer PDP-Kontextantwortmeldung oder mit Abrechnungsinformation über eine CDR für eine offline-mäßige Abrechnung zu einem Abrechnungsknoten sendet.

42. Verfahren nach Anspruch 34 nach Anspruch 34, wobei dann, wenn das mobile Endgerät einer dienstbasierenden lokalen (absatz-)politischen Geltendmachung zustimmt, der GGSN eine SBLP-implementierte Anzeige in einer PDP-Kontextantwortmeldung oder mit einer Abrechnungsinformation über eine CDR für eine offline-mäßige Abrechnung zu einem Abrechnungsknoten sendet.

43. Verfahren nach Anspruch 26, das weiterhin folgendes aufweist:
eine GPRS-Einheit mit dem Dienstabrechnungs-Identifizierer in einer ersten Abrechnungsmeldung, die zu der Session gehört, zu einer Abrechnungseinheit; und
eine IMS-Einheit mit dem Dienstabrechnungs-Identifizierer in einer zweiten Abrechnungsmeldung, die zu der Session gehört, zu der Abrechnungseinheit,
wobei die Abrechnungseinheit den Korrelierschritt durchführt.

44. Verfahren nach Anspruch 43, wobei die erste und die zweite Abrechnungsmeldung einer ersten und einer zweiten Anrufdatenaufzeichnung entsprechen.

45. Verfahren nach Anspruch 43, wobei die erste Abrechnungsmeldung einer CAMEL-Abrechnungsmeldung entspricht und die zweite Abrechnungsmeldung einer DIAMETER-Abrechnungsmeldung entspricht.

46. Verfahren nach Anspruch 43, wobei die erste Abrechnungsmeldung Information in Bezug auf in dem GPRS-Netzwerk für die Session verwendete GPRS-Trägerdienste enthält.

47. Verfahren nach Anspruch 46, wobei die Information GPRSträgerspezifische Abrechnungsinformation für einen oder mehrere GPRS-Träger enthält, die in der Session verwendet sind.

48. Verfahren nach Anspruch47, wobei die Information eines oder meheres von dem Folgenden enthält: eine Lokalisierung des mobilen Endgeräts, eine Lokalisierung des entfernten Hosts, ein Volumen gesendeter oder empfangener Pakete, einen Dienstqualitätsparameter und eine Zeit, zugehörig zu einem oder mehreren der in der Session verwendeten GPRS-Träger.

49. Verfahren nach Anspruch 43, wobei die zweite Abrechnungsmeldung Information in Bezug auf in dem IMS für die Session verwendete Dienste enthält.

50. Verfahren nach Anspruch 49, wobei die Information eines oder mehreres von dem Folgenden enthält: einen Typ eines verwendeten Dienstes auf Multimediaebene, eine Identität von Ursprungs- und Beendigungseinheiten, dienstbasierende lokale (absatz-)politische Beschränkungen, diskontierte Abrechnungsszenarien und eine Menge an Zeit, in welcher Session-Ressourcen verwendet sind.

51. Verfahren nach Anspruch 43, das weiterhin folgendes aufweist:
Senden, in der ersten Abrechnungsmeldung, des Dienstabrechnungs-Identifizierers und einer GPRS-Netzwerk-Abrechnungsidentität für die Session zu der Abrechnungseinheit,
Senden, in der zweiten Abrechnungsmeldung, des Dienstabrechnungs-Identifizierers und einer IMS-Abrechnungsidentität für die Session zu der Abrechnungseinheit,
wobei die Abrechnungseinheit den Dienstabrechnungs-Identifizierer und die GPRS- und IMS-Abrechnungsidentitäten zum Erzeugen einer Abrechnung für die Session verwendet.

52. Verfahren nach Anspruch 43, das weiterhin folgendes aufweist:
Verwenden des Dienstabrechnungs-Identifizierers zum Anzeigen zu der Abrechnungseinheit, ob ein Abrechnungsrabatt bzw. eine Abrechungsdiskontierung für die Session gilt.

53. Mobiles Endgerät, das zum Aufbauen einer Multimediasession zwischen dem mobilen Endgerät und einem entfernten Host unter Verwendung einer Session-Signalgabe geeignet ist, wobei die Multimediasession mehrere Mediendatenströme enthält, wobei das mobile Endgerät mit einem Multimediasystem gekoppelt ist, das Multimediasessiondienste liefert, wobei das mobile Endgerät eine elektronische Schaltung aufweist, die zum Durchführen der folgenden Aufgaben konfiguriert ist:
Initiieren der Multimediasession unter Verwendung einer Session-Signalgabe, so dass eine Vielzahl von Medienpaketzugangsträgern über ein paketgeschaltetes Zugangsnetzwerk zum Transportieren von entsprechenden der Mediendatenströme zwischen dem mobilen Endgerät und der Zugangsstelle eingerichtet werden kann;
Empfangen eines Dienstabrechnungs-Identifizierers;
Bestimmen, ob der Dienstabrechnungs-Identifizierer in einer Paketkontextmeldung zu senden ist, um zu dem paketgeschalteten Zugangsnetzwerk gesendet zu werden;
wobei ein Senden des Dienstabrechnungs-Identifizierers in der Paketkontextmeldung eine Zustimmung durch das mobile Endgerät zu einem Abrechnungsarrangement anzeigt, das Sessionabrechnungen, die zu der Multimediasession für einen ersten Betrieb gehören, der in dem paketgeschalteten Zugangsnetzwerk durchgeführt ist, das zu der Multimediasession gehört, und für einen zweiten Betrieb, der in dem Multimediasystem durchgeführt ist, das zu der Multimediasession gehört, gehören, korreliert, und wobei kein Senden des Sessionabrechnungs-Identifizierers in der Paketkontextmeldung anzeigt, das das mobile Endgerät dem Abrechnungsarrangement nicht zustimmt.

54. Mobiles Endgerät nach Anspruch 53, wobei die Sessionabrechnungen Abrechnungen für einen durch das paketgeschaltete Zugangsnetzwerk durchgeführten ersten Betrieb und für einen durch das Multimediasystem durchgeführten zweiten Betrieb enthalten.

55. Mobiles Endgerät nach Anspruch 54, wobei die elektronische Schaltung konfiguriert ist, um eine Zustimmung zu einem Rabatt-Abrechnungsarrangement für eine kombinierte Abrechnung für den ersten und den zweiten Betrieb durch Senden des Dienstabrechnungs-Identifizierers in der Paketkontextmeldung anzuzeigen.

56. Mobiles Endgerät nach Anspruch 54, wobei die elektronische Schaltung konfiguriert ist, um eine Zustimmung zu einer dienstbasierenden lokalen (absatz-)politischen Geltendmachung auf einer Zugangsträgerebene anzuzeigen, die durch ein Besuchsnetzwerk inszeniert ist und durch einen Gatekeeper-Knoten in dem paketgeschalteten Zugangsnetzwerk verstärkt ist, indem der Dienstabrechnungs-Identifizierer in der Paketkontextmeldung gesendet wird.

57. Mobiles Endgerät nach Anspruch 54, wobei das paketgeschaltete Zugangsnetzwerk ein GPRS-Netzwerk ist und das Multimediasystem ein auf IP basierendes Multimediasystem (IMS) ist, das Multimediasessiondienste mittels GPRS-Trägern liefert, und wobei die Paketkontextmeldung eine PDP-Kontext-Aktivierungsmeldung ist.

58. Mobiles Endgerät nach Anspruch 57, wobei der Dienstabrechnungs-Identifizierer in einem Feld für PDP-Konfigurationsoptionen (PCO) in der PDP-Kontext-Aktivierungsmeldung enthalten ist.

59. Mobiles Endgerät nach Anspruch 54, wobei die elektronische Schaltung konfiguriert ist, um den Dienstabrechnungs-Identifizierer mit dem Medienstrom-Identifizierer zu kombinieren.

60. Knoten in einem paketgeschalteten Zugangsnetzwerk, das mit einem Funk-Zugangsnetzwerk und mit einem Multimediasystem zum Liefern von Diensten in einer Multimediasession zwischen einem mobilen Endgerät und einem entfernten Host gekoppelt ist, wobei in Reaktion auf eine Anfrage nach einer Multimediasession von dem mobilen Endgerät eine Multimediasession unter Beteiligung des mobilen Endgeräts eingerichtet wird, die eine Vielzahl von Mediendatenströmen enthält, die ein Einrichten einer Vielzahl von Medienpaketzugangsträgern zwischen dem mobilen Endgerät und der Zugangsstelle enthalten, wobei die Medienpaketzugangsträger entsprechende der Mediendatenströme über das paketgeschaltete Zugangsnetzwerk transportieren, umfassend eine elektronische Schaltung, die konfiguriert ist, um die folgenden Aufgaben durchzuführen:
Empfangen eines Dienstabrechnungs-Identifizierers;
Einschließen des Dienstabrechnungs-Identifizierers in einer Abrechnungsmeldung, die zu der Multimediasession gehört; und
Senden der Dienstabrechnungsmeldung mit dem Dienstabrechnungs-Identifizierer zu einer Abrechnungseinheit.

61. Knoten für ein paketgeschaltetes Zugangsnetzwerk nach Anspruch 60, wobei die elektronische Schaltung konfiguriert ist, um den Dienstabrechnungs-Identifizierer mit zusätzlicher Information zu kombinieren.

62. Knoten für ein paketgeschaltetes Zugangsnetzwerk nach Anspruch 61, wobei die zusätzliche Information einen Netzwerk-Identifizierer enthält, der zu der Multimediasession gehört.

63. Knoten für ein paketgeschaltetes Zugangsnetzwerk nach Anspruch 60, wobei das paketgeschaltete Zugangsnetzwerk ein GPRS-Netzwerk ist und der Knoten für ein paketgeschaltetes Zugangsnetzwerk ein SGSN ist, wobei die elektronische Schaltung in dem SGSN konfiguriert ist, um:
eine PDF-Kontextmeldung von dem mobilen Endgerät zu empfangen, die den Dienstabrechnungs-Identifizierer enthält, und
den Dienstabrechnungs-Identifizierer in einer PDF-Kontext-Anforderungsmeldung zu einem GGSN weiterzuleiten.

64. Knoten für ein paketgeschaltetes Zugangsnetzwerk nach Anspruch 60, wobei das paketgeschaltete Zugangsnetzwerk ein GPRS-Netzwerk ist und der Knoten für ein paketgeschaltetes Zugangsnetzwerk ein SGSN ist, wobei die elektronische Schaltung in dem SGSN konfiguriert ist, um:
eine PDP-Kontextmeldung von dem mobilen Endgerät zu empfangen, die den Dienstabrechnungs-Identifizierer enthält, und
den Dienstabrechnungs-Identifizierer zu der Abrechnungseinheit in einer Abrechnungsmeldung weiterzuleiten.

65. Knoten für ein paketgeschaltetes Zugangsnetzwerk nach Anspruch 64, wobei die Abrechnungsmeldung eine in Echtzeit gesendet CAMEL-Meldung ist.

66. Knoten für ein paketgeschaltetes Zugangsnetzwerk nach Anspruch 64, wobei die Abrechnungsmeldung eine Anforderung für im Voraus bezahlte Dienste ist, die zu der Multimediasession gehören.

67. Knoten für ein paketgeschaltetes Zugangsnetzwerk nach Anspruch 60, wobei das paketgeschaltete Zugangsnetzwerk ein GPRS-Netzwerk ist und der Knoten für ein paketgeschaltetes Zugangsnetzwerk ein GGSN ist, wobei die elektronische Schaltung in dem GGSN konfiguriert ist, um:
einen PDP-Kontext-Anforderungsmeldung zu empfangen, die den Dienstabrechnungs-Identifizierer enthält, und
auf die PDP-Kontext-Anforderungsmeldung mit dem Dienstabrechnungs-Identifizierer zu reagieren bzw. zu antworten.

68. Knoten für ein paketgeschaltetes Zugangsnetzwerk nach Anspruch 60, wobei das paketgeschaltete Zugangsnetzwerk ein GPRS-Netzwerk ist und der Knoten für ein paketgeschaltetes Zugangsnetzwerk ein GGSN ist, wobei die elektronische Schaltung in dem GGSN konfiguriert ist, um:
eine dienstbasierende lokale Politik für die Multimediasession unter Verwendung des Dienstabrechnungs-Identifizierers zu implementieren, und
eine Abrechnungsmeldung, die eine Implementierung der dienstbasierenden lokalen Politik für die Multimediasession anzeigt, zu senden.

69. Knoten für ein paketgeschaltetes Zugangsnetzwerk nach Anspruch 60, wobei das paketgeschaltete Zugangsnetzwerk ein GPRS-Netzwerk ist und der Knoten für ein paketgeschaltetes Zugangsnetzwerk ein GGSN ist, wobei die elektronische Schaltung in dem GGSN konfiguriert ist, um eine Abrechnungsmeldung zu einer Abrechnungseinheit zu senden, die zu der Multimediasession gehört, und die den Dienstabrechnungs-Identifizierer enthält, so dass die Abrechnungseinheit Dienstabrechnungen auf GPRS-Trägerebene mit Abrechnungen auf Sessionebene für die Multimediasession korrelieren kann.

70. Multimediadienststeuerung zum Aufbauen einer Multimediasession zwischen einem mobilen Endgerät und einem entfernten Host unter Verwendung einer Session-Signalgabe, wobei die Multimediasession mehrere Mediendatenströme enthält, wobei das mobile Endgerät mit einem paketgeschalteten Zugangsnetzwerk und mit einem Multimediasystem, das Multimediasessiondienste liefert, gekoppelt ist, wobei die Multimediadienststeuerung folgendes aufweist:
eine elektronische Schaltung, die konfiguriert ist, um zu dem mobilen Endgerät und zu einer Abrechnungseinheit einen Dienstabrechnungs-Identifizierer zu liefern, der zu der Multimediasession gehört,
wobei die Abrechnungseinheit den Dienstabrechnungs-Identifizierer zum Korrelieren von Sessionabrechnungen verwendet, die zu der Multimediasession für einen Dienst für ein paketgeschaltetes Zugangsnetzwerk gehören, einschließlich eines ersten Betriebs, der in dem paketgeschalteten Zugangsnetzwerk durchgeführt wird, das zu der Multimediasession gehört, und für einen Multimediasystemdienst, einschließlich eines zweiten Betriebs, der in dem Multimediasystem durchgeführt wird, das zu der Multimediasession gehört.

71. Multimediadienststeuerung nach Anspruch 70, wobei der Dienst eines paketgeschalteten Zugangsnetzwerks ein Dienst auf Trägerebene ist und der Dienst eines Multimediasystems ein Dienst auf Sessionebene ist.

72. Multimediadienststeuerung nach Anspruch 70, wobei die Multimediadienststeuerung eine dienende Multimediadienststeuerung ist, die zu einem Heimnetzwerkbetreiber des mobilen Endgeräts gehört.

73. Multimediadienststeuerung nach Anspruch 72, wobei die dienende Multimediadienststeuerung den Dienstabrechnungs-Identifizierer dazu verwendet, der Abrechnungseinheit den Aufbau und die Beendigung der Multimediasession mitzuteilen.

74. Multimediadienststeuerung nach Anspruch 70, wobei die Multimediadienststeuerung eine Proxy-Multimediadienststeuerung ist, die zu einem Netzwerk gehört, das durch mobile Endgerät besucht wird.

75. Multimediadienststeuerung nach Anspruch 74, wobei die Proxy-Multimediadienststeuerung den Dienstabrechnungs-Identifizierer bei auf (Absatz-)Politik bzw. auf eine Police bezogenen Kommunikationen mit einer Politiksteuerfunktion in dem Multimediasystem und einem Gatekeeper in dem paketgeschalteten Zugangsnetzwerk verwendet.

76. Abrechnungssteuerung, die zum Korrelieren von Sessionabrechnungen bei einer Multimediasession zwischen einem mobilen Endgerät und einem entfernten Host unter Verwendung einer Session-Signalgabe geeignet ist, wobei de Multimediasession mehrere Mediendatenströme enthält,
wobei das mobile Endgerät mit einem paketgeschalteten Zugangsnetzwerk und mit einem Multimediasystem, das Multimediasessiondienste liefert, gekoppelt ist, wobei die Abrechnungssteuerung eine elektronische Schaltung aufweist, die zum Durchführen der folgenden Aufgaben konfiguriert ist:
Empfangen einer ersten Abrechnungsmeldung mit einem Dienstabrechnungs-Identifizierer, der zu der Multimediasession gehört, von dem paketgeschalteten Zugangsnetzwerk;
Empfangen einer zweiten Abrechnungsmeldung mit dem Dienstabrechnungs-Identifizierer von dem Multimediasystem; und
Verwenden des Dienstabrechnungs-Identifizierers zum Korrelieren von Sessionabrechnungen, die zu der Multimediasession gehören, für einen Dienst eines paketgeschalteten Zugangsnetzwerks einschließlich eines ersten Betriebs, der in dem paketgeschalteten Zugangsnetzwerk durchgeführt wird, das zu der Multimediasession gehört, und für einen Dienst des Multimediasystems einschließlich eines zweiten Betriebs, der in dem Multimediasystem durchgeführt wird, das zu der Multimediasession gehört.

77. Abrechnungssteuerung nach Anspruch 76, wobei die erste und die zweite Abrechnungsmeldung Anrufdatenaufzeichnungen sind.

78. Abrechnungssteuerung nach Anspruch 76, wobei die erste Abrechnungsmeldung eine CAMEL-Meldung ist und die zweite Abrechnungsmeldung eine DIAMETER-Meldung ist.

79. Abrechnungssteuerung nach Anspruch 76, wobei die elektronische Schaltung konfiguriert ist, um eine kombinierte Dienstabrechnung für die Multimediasession zu erzeugen, die Abrechnungen für den Dienst des paketgeschalteten Zugangsnetzwerks und den Dienst des Multimediasystems in eine Abrechnung für die Session kombiniert.

80. Abrechnungssteuerung nach Anspruch 79, wobei die elektronische Schaltung zum Liefern von diskontierten Abrechnungen für die Session konfiguriert ist, wenn das mobile Endgerät kombinierten Abrechnungen zustimmt.

81. Abrechnungssteuerung nach Anspruch 79, wobei die elektronische Schaltung konfiguriert ist, um diskontierte Abrechnungen für die Session zu liefern, wenn das mobile Endgerät einem Dienstvertrag zustimmt, der zu einem Heimnetzwerk des mobilen Endgeräts gehört.

82. Abrechnungssteuerung nach Anspruch 79, wobei die elektronische Schaltung konfiguriert ist, um eine dienstbasierende lokale (absatz-)politische implementierte Meldung zu kontieren, die von dem paketgeschalteten Zugangsnetzwerk empfangen wird, bei einer Sessionabrechnung.

83. Abrechnungssteuerung nach Anspruch 79, wobei der Dienstabrechnungs-Identifizierer die Multimediasession und diejenige Einheit des paketgeschalteten Zugangsnetzwerks und des Multimediasystems, die jeweils die erste oder die zweite Abrechnungsmeldung sendete, identifiziert.

84. Abrechnungssteuerung nach Anspruch 76, wobei der Dienstabrechnungs-Identifizierer zum Korrelieren von Sessionabrechnungen für ein Modell verwendet wird, bei welchem eine A-Partei eine Abrechnung bezahlt.

85. Abrechnungssteuerung nach Anspruch 76, wobei eine A-Seite der Session das mobile Endgerät, das paketgeschaltete Zugangsnetzwerk, das Multimediasystem und die Abrechnungssteuerung enthält und eine B-Seite der Session gleiche Einheiten enthält, wobei ein Dienstabrechnungs-Identifizierer der A-Seite zum Korrelieren von Sessionabrechnungen für die A-Seite verwendet wird und ein Dienstabrechnungs-Identifizierer der B-Seite zum Korrelieren von Sessionabrechnungen für die B-Seite verwendet wird, und wobei die Abrechnungssteuerung der A-Seite und die Abrechnungssteuerung der B-Seite Abrechnungsinformation für die Session zum Erzeugen einer Sessionabrechnung kommunizieren.

## Revendications

1. Procédé pour taxer une session multimédia établie entre un terminal mobile et un hôte distant, dans lequel la session multimédia entre le terminal mobile et l'hôte distant est établie sur un réseau d'accès radio par l'intermédiaire d'un réseau d'accès à commutation de paquets couplé à un système multimédia, ayant un ou plusieurs serveurs multimédias pour fournir des services multimédias pour des sessions multimédias ;
**caractérisé par** les étapes supplémentaires suivantes:
générer un jeton incluant un identificateur de session associé à la session multimédia ; et en utilisant le jeton, corréler des taxes de session pour une première opération dans le réseau d'accès à commutation de paquets associé à la session multimédia, et pour une deuxième opération effectuée dans le système multimédia associé à la session multimédia.

2. Procédé selon la revendication 1, comprenant en outre les étapes suivantes :
une première entité dans le réseau d'accès à commutation de paquets inclut le jeton dans un premier message de taxation associé à la session, envoyé à une entité de taxation ; et
une deuxième entité dans le système multimédia inclut le jeton dans un deuxième message de taxation associé à la session, envoyé à l'entité de taxation,
dans lequel l'entité de taxation accomplit l'étape de corrélation.

3. Procédé selon la revendication 2, dans lequel les premier et deuxième messages de taxation correspondent à des premier et deuxième enregistrements de données d'appel.

4. Procédé selon la revendication 2, dans lequel le premier message de taxation inclut une information liée à des services supports utilisés dans le réseau d'accès à commutation de paquets pour la session.

5. Procédé selon la revendication 4, dans lequel l'information inclut une information de taxation spécifique au support d'accès pour un ou plusieurs supports d'accès utilisés dans la session.

6. Procédé selon la revendication 5, dans lequel l'information inclut un ou plusieurs des éléments suivants : emplacement du terminal mobile, emplacement de l'hôte distant, volume de paquets émis ou reçu, temps, et paramètres de qualité de service associés à un ou plusieurs des supports d'accès par paquets utilisés dans la session.

7. Procédé selon la revendication 2, dans lequel le deuxième message de taxation inclut une information concernant des services utilisés dans le système multimédia pour la session.

8. Procédé selon la revendication 7, dans lequel l'information inclut un ou plusieurs des éléments suivants : type de service multimédia, identité d'entités d'origine et de destination, restrictions de règles locales basées sur des services, scénarios de taxation avec rabais, et durée pendant laquelle des ressources de session sont utilisées.

9. Procédé selon la revendication 2, le procédé comprenant en outre les étapes suivantes :
envoyer à l'entité de taxation, dans le premier message de taxation, l'identificateur de session et une identité de taxation de réseau d'accès pour la session, et
envoyer à l'entité de taxation, dans le deuxième message de taxation, l'identificateur de session et une identité de taxation de système multimédia pour la session,
dans lequel le noeud de taxation utilise l'identificateur de session et des identités de taxation dans les premier et deuxième messages de taxation, pour générer une taxe pour la session.

10. Procédé selon la revendication 1, comprenant en outre l'étape suivante :
utiliser le jeton pour indiquer si un rabais de taxation s'applique à la session.

11. Procédé selon la revendication 1, dans lequel le jeton est généré par une entité dans le système multimédia, le procédé comprenant en outre l'étape suivante :
envoyer le jeton au terminal mobile à partir de l'entité.

12. Procédé selon la revendication 11, dans lequel si le terminal mobile envoie le jeton au réseau d'accès à commutation de paquets, le terminal mobile indique son accord pour la taxation de la session multimédia d'une manière selon laquelle des services de niveau de support et de niveau de session pour la session sont combinés.

13. Procédé selon la revendication 12, dans lequel si le terminal mobile n'envoie pas le jeton au réseau d'accès à commutation de paquets, le terminal mobile indique une décision de ne pas accepter la taxation de la session multimédia d'une manière selon laquelle les services de niveau de support et de niveau de session pour la session sont combinés.

14. Procédé selon la revendication 11, dans lequel l'entité est associée à un opérateur de réseau nominal du terminal mobile, et dans lequel en envoyant le jeton au réseau d'accès à commutation de paquets, le terminal mobile donne son accord à un contrat de niveau de service avec l'opérateur de réseau nominal.

15. Procédé selon la revendication 11, dans lequel l'entité est associée à un réseau visité, et dans lequel en envoyant le jeton au réseau d'accès à commutation de paquets, le terminal mobile indique son accord à l'application de règles locales basées sur des services (SBLP pour "Service-Based Local Policy") pour des services supports au niveau de réseau d'accès basé sur des paquets dans le réseau visité.

16. Procédé selon la revendication 1, dans lequel la première opération est un service de niveau de support lié au transport de chaque flux de média dans la session à travers le réseau d'accès à commutation de paquets.

17. Procédé selon la revendication 1, dans lequel la deuxième opération est un service de niveau de session concernant l'établissement ou la commande de services multimédias demandés pour la session.

18. Procédé selon la revendication 1, dans lequel si le jeton n'est pas utilisé, des services du niveau de support et du niveau de session associés à la session sont taxés séparément.

19. Procédé selon la revendication 1, dans lequel le jeton inclut un identificateur de session, le procédé comprenant en outre les étapes suivantes :
générer un jeton complet pour chaque flux de média en utilisant l'identificateur de session et un identificateur de flux de média correspondant à ce flux de données de média,
dans lequel le jeton complet est utilisé pour corréler des taxes du niveau de support pour chaque flux de données de média avec des taxes du niveau de session pour chaque flux de données de média.

20. Procédé selon la revendication 1, dans lequel le jeton est chiffré.

21. Procédé selon la revendication 1, dans lequel le jeton est envoyé au terminal mobile et à l'hôte distant.

22. Procédé selon la revendication 1, comprenant en outre les étapes suivantes :
générer des premier et deuxième jetons différents associés à la session multimédia, le premier jeton étant associé au terminal mobile et le deuxième jeton étant associé à l'hôte distant.

23. Procédé selon la revendication 22, comprenant en outre l'étape suivante :
utiliser les premier et deuxième jetons pour corréler des taxes de session.

24. Procédé selon la revendication 1, comprenant en outre l'étape suivante :
utiliser le jeton pour corréler les taxes dans la session multimédia, dans un modèle de taxation à paiement par le correspondant A.

25. Procédé selon la revendication 1, dans lequel
une signalisation de niveau de session est utilisée, la session multimédia est lancée avec plusieurs flux de données de médias entre le terminal mobile et un hôte distant couplé au terminal mobile, qui est couplé à un système multimédia basé sur IP (IMS pour "IP-based Multimedia System") qui fournit des services de session multimédia au moyen d'un réseau General Packet Radio Service (GPRS) ;
un identificateur de taxation de service correspondant à la session est généré, et
des taxes liées à des opérations qui sont effectuées dans l'IMS et le réseau GPRS associé à la session, sont corrélées en utilisant l'identificateur de taxation de service.

26. Procédé selon la revendication 25, dans lequel une entité de fonction de commande de service d'appel (CSCF pour "Call Service Control Function") dans l'IMS génère l'identificateur de taxation de service et l'envoie au terminal mobile.

27. Procédé selon la revendication 26, dans lequel l'entité CSCF est une entité CSCF de desserte (S-CSCF pour "Serving-CSCF") associée à un réseau nominal pour le terminal mobile.

28. Procédé selon la revendication 27, dans lequel si le terminal mobile envoie l'identificateur de taxation de service au réseau GPRS, le terminal mobile indique son accord pour la taxation combinée à la fois des services de niveau de support et de niveau de session pour la session multimédia.

29. Procédé selon la revendication 28, dans lequel si le terminal mobile n'envoie pas le jeton au réseau GPRS, le terminal mobile indique une décision de ne pas accepter la taxation combinée pour la session multimédia.

30. Procédé selon la revendication 28, dans lequel en envoyant l'identificateur de taxation de service au réseau GPRS, le terminal mobile donne son accord à un contrat de niveau de service avec un opérateur de réseau nominal du terminal mobile.

31. Procédé selon la revendication 26, dans lequel l'entité CSCF est une entité CSCF mandataire (P-CSCF pour "Proxy-CSCF") associée à un réseau visité par le terminal mobile.

32. Procédé selon la revendication 31, dans lequel en envoyant l'identificateur de taxation de service au réseau GPRS, le terminal mobile indique son accord pour l'application de règles locales basées sur des services (SBLP) pour des services supports au niveau de réseau GPRS, sur la base d'une information de règles pour la session qui est fournie par la P-CSCF / PCF à un noeud de portier dans le réseau GPRS.

33. Procédé selon la revendication 32, dans lequel le portier inclut un indicateur mis en oeuvre par SBLP dans un message de taxation lié à la session multimédia, envoyé à un noeud de taxation.

34. Procédé selon la revendication 26, dans lequel le terminal mobile inclut l'identificateur de taxation de service dans un message de contexte de protocole "Packet Data Protocol" (PDF) envoyé à un noeud dans le réseau GPRS.

35. Procédé selon la revendication 34, dans lequel l'identificateur de taxation de service est inclus dans un champ d'options de configuration PDP (PCO pour "PDP Configuration Options").

36. Procédé selon la revendication 34, dans lequel le noeud GPRS est un noeud de support GPRS de desserte (SGSN pour "Serving GPRS Support Node").

37. Procédé selon la revendication 36, dans lequel le SGSN envoie l'identificateur de taxation de service avec une information de taxation à un noeud de commande de coût de réseau nominal.

38. Procédé selon la revendication 36, dans lequel le noeud de commande de coût de réseau nominal effectue une taxation en temps réel ou une taxation pré-payée.

39. Procédé selon la revendication 36, dans lequel le SGSN envoie l'identificateur de taxation de service avec une information de taxation sur une interface CAMEL, en temps réel ou avant que la session ne commence.

40. Procédé selon la revendication 36, dans lequel le SGSN envoie l'identificateur de taxation de service avec une information de taxation dans un enregistrement de données d'appel (CDR pour "Call Data Record") au noeud de taxation, après la fin de la session.

41. Procédé selon la revendication 34, dans lequel un noeud de support GPRS de passerelle (GGSN pour "Gateway GPRS Support Node") envoie l'identificateur de taxation de service à un noeud de taxation dans un message de réponse de contexte de PDP ou avec une information de taxation, par l'intermédiaire d'un CDR pour la taxation hors ligne.

42. Procédé selon la revendication 34, dans lequel si le terminal mobile donne son accord à l'application de règles locales basées sur des services, le GGSN envoie à un noeud de taxation une indication mise en oeuvre par SBLP, dans un message de réponse de contexte de PDP, ou avec une information de taxation par l'intermédiaire d'un CDR pour la taxation hors ligne.

43. Procédé selon la revendication 26, comprenant en outre :
une entité GPRS incluant l'identificateur de taxation de service, dans un premier message de taxation associé à la session, envoyé à l'entité de taxation ; et
une entité IMS incluant l'identificateur de taxation de service dans un deuxième message de taxation associé à la session, envoyé à l'entité de taxation,
dans lequel l'entité de taxation accomplit l'étape de corrélation.

44. Procédé selon la revendication 43, dans lequel les premier et deuxième messages de taxation correspondent à des premier et deuxième enregistrements de données d'appel.

45. Procédé selon la revendication 43, dans lequel le premier message de taxation correspond à un message de taxation CAMEL et le deuxième message de taxation correspond à un message de taxation DIAMETER.

46. Procédé selon la revendication 43, dans lequel le premier message de taxation inclut une information liée à des services supports GPRS utilisés dans le réseau GPRS pour la session.

47. Procédé selon la revendication 46, dans lequel l'information inclut une information de taxation spécifique au support GPRS, pour un ou plusieurs supports GPRS utilisés dans la session.

48. Procédé selon la revendication 47, dans lequel l'information inclut un ou plusieurs des éléments suivants : emplacement du terminal mobile, emplacement de l'hôte distant, volume de paquets envoyés ou reçus, un paramètre de qualité de service, et le temps, associés à un ou plusieurs des supports GPRS utilisés dans la session.

49. Procédé selon la revendication 43, dans lequel le deuxième message de taxation inclut une information liée à des services utilisés dans l 'IMS pour la session.

50. Procédé selon la revendication 49, dans lequel l'information inclut un ou plusieurs des éléments suivants : type de service de niveau multimédia utilisé, identité des entités d'origine et de destination, restrictions de règles locales basées sur des services, scénarios de taxation avec rabais, et durée pendant laquelle des ressources de session sont utilisées.

51. Procédé selon la revendication 43, comprenant en outre les étapes suivantes :
envoyer à l'entité de taxation, dans le premier message de taxation, l'identificateur de taxation de service et une identité de taxation de réseau GPRS pour la session,
envoyer à l'entité de taxation, dans le deuxième message de taxation, l'identificateur de taxation de service et l'identité de taxation IMS pour la session,
dans lequel l'entité de taxation utilise l'identificateur de taxation de service et les identités de taxation GPRS et IMS pour générer une taxe pour la session.

52. Procédé selon la revendication 43, comprenant en outre l'étape suivante :
utiliser l'identificateur de taxation de service pour indiquer à l'entité de taxation si un rabais de taxation s'applique à la session.

53. Terminal mobile convenant pour l'établissement d'une session multimédia entre le terminal mobile et un hôte distant utilisant une signalisation de session, dans lequel la session multimédia inclut plusieurs flux de données de médias, le terminal mobile étant couplé à un système multimédia qui fournit des services de session multimédia, le terminal mobile comprenant un circuit électronique configuré pour accomplir les tâches suivantes :
lancer la session multimédia en utilisant une signalisation de session, de façon qu'une multiplicité de supports d'accès de paquets de médias puissent être établis sur un réseau d'accès à commutation de paquets, pour transporter des flux correspondants parmi les flux de données de médias, entre le terminal mobile et le point d'accès ;
recevoir un identificateur de taxation de service ;
déterminer s'il faut envoyer l'identificateur de taxation de service dans un message de contexte de paquets à envoyer au réseau d'accès à commutation de paquets,
dans lequel l'envoi de l'identificateur de taxation de service dans le message de contexte de paquets indique un accord donné par le terminal mobile à un arrangement de taxation qui corrèle des taxes de session associées à la session multimédia pour une première opération effectuée dans le réseau d'accès à commutation de paquets associé à la session multimédia, et pour une deuxième opération effectuée dans le système multimédia associé à la session multimédia, et dans lequel l'absence d'envoi de l'identificateur de taxation de session dans le message de contexte de paquets indique que le terminal mobile ne donne pas son accord à l'arrangement de taxation.

54. Terminal mobile selon la revendication 53, dans lequel les taxes de session incluent des taxes pour une première opération effectuée par le réseau d'accès à commutation de paquets et pour une deuxième opération effectuée par le système multimédia.

55. Terminal mobile selon la revendication 54, dans lequel le circuit électronique est configuré pour indiquer l'accord donné à un arrangement de taxation avec rabais pour une taxe combinée pour les première et deuxième opérations, par l'envoi de l'identificateur de taxation de service dans le message de contexte de paquets.

56. Terminal mobile selon la revendication 54, dans lequel le circuit électronique est configuré pour indiquer son accord à l'application de règles locales basées sur des services, à un niveau de support d'accès, orchestrée par un réseau de visite et imposée par un noeud de portier dans le réseau d'accès à commutation de paquets, par l'envoi d'un identificateur de taxation de service dans le message de contexte de paquets.

57. Terminal mobile selon la revendication 54, dans lequel le réseau d'accès à commutation de paquets est un réseau GPRS et le système multimédia est un système multimédia basé sur IP (IMS) qui fournit des services de session multimédia au moyen de supports GPRS, et dans lequel le message de contexte de paquets est un message d'activation de contexte PDP.

58. Terminal mobile selon la revendication 57, dans lequel l'identificateur de taxation de service est inclus dans un champ d'options de configuration PDP (PCO) dans le message d'activation de contexte PDP.

59. Terminal mobile selon la revendication 54, dans lequel le circuit électronique est configuré pour combiner l'identificateur de taxation de service avec un identificateur de flux de média.

60. Noeud dans un réseau d'accès à commutation de paquets couplé à un réseau d'accès radio et à un système multimédia pour fournir des services dans une session multimédia entre un terminal mobile et un hôte distant, dans lequel en réponse à une demande de session multimédia provenant du terminal mobile, il est établi une session multimédia faisant intervenir le terminal mobile, qui inclut une multiplicité de flux de données de médias, incluant l'établissement d'une multiplicité de supports d'accès de paquets de médias entre le terminal mobile et le point d'accès, les supports d'accès de paquets de médias transportant des flux correspondants parmi les flux de données de médias sur le réseau d'accès à commutation de paquets, comprenant un circuit électronique configuré pour accomplir les tâches suivantes :
recevoir un identificateur de taxation de service ;
inclure l'identificateur de taxation de service dans un message de taxation associé à la session multimédia ; et
envoyer à une entité de taxation le message de taxation de service avec l'identificateur de taxation de session.

61. Noeud de réseau d'accès à commutation de paquets selon la revendication 60, dans lequel le circuit électronique est configuré pour combiner l'identificateur de taxation de service avec une information supplémentaire.

62. Noeud de réseau d'accès à commutation de paquets selon la revendication 61, dans lequel l'information supplémentaire inclut un identificateur de réseau associé à la session multimédia.

63. Noeud de réseau d'accès à commutation de paquets selon la revendication 60, dans lequel le réseau d'accès à commutation de paquets est un réseau GPRS et le noeud de réseau d'accès à commutation de paquets est un SGSN, le circuit électronique dans le SGSN étant configuré pour :
recevoir un message de contexte PDF provenant du terminal mobile, qui inclut l'identificateur de taxation de service, et
diriger l'identificateur de taxation de service vers un GGSN dans un message de demande de contexte PDF.

64. Noeud de réseau d'accès à commutation de paquets selon la revendication 60, dans lequel le réseau d'accès à commutation de paquets est un réseau GPRS et le noeud de réseau d'accès à commutation de paquets est un SGSN, le circuit électronique dans le SGSN étant configuré pour :
recevoir un message de contexte PDP provenant du terminal mobile, qui inclut l'identificateur de taxation de service, et
diriger l'identificateur de service vers l'entité de taxation, dans un message de taxation.

65. Noeud de réseau d'accès à commutation de paquets selon la revendication 64, dans lequel le message de taxation est un message CAMEL envoyé en temps réel.

66. Noeud de réseau d'accès à commutation de paquets selon la revendication 64, dans lequel le message de taxation est une demande de services pré-payés associés à la session multimédia.

67. Noeud de réseau d'accès à commutation de paquets selon la revendication 60, dans lequel le réseau d'accès à commutation de paquets est un réseau GPRS et le noeud de réseau d'accès à commutation de paquets est un GGSN, le circuit électronique dans le GGSN étant configuré pour :
recevoir un message de demande de contexte PDP qui inclut l'identificateur de taxation de service, et
réagir au message de demande de contexte PDP incluant l'identificateur de taxation de service.

68. Noeud de réseau d'accès à commutation de paquets selon la revendication 60, dans lequel le réseau d'accès à commutation de paquets est un réseau GPRS et le noeud de réseau d'accès à commutation de paquets est un GGSN, le circuit électronique dans le GGSN étant configuré pour :
mettre en oeuvre des règles locales basées sur des services pour la session multimédia en utilisant l'identificateur de taxation de service, et
envoyer un message de taxation indiquant la mise en oeuvre des règles locales basées sur des services pour la session multimédia.

69. Noeud de réseau d'accès à commutation de paquets selon la revendication 60, dans lequel le réseau d'accès à commutation de paquets est un réseau GPRS et le noeud de réseau d'accès à commutation de paquets est un GGSN, le circuit électronique dans le GGSN étant configuré pour envoyer un message de taxation à l'entité de taxation associée à la session multimédia, incluant l'identificateur de taxation de service, de façon que l'entité de taxation puisse corréler des taxes de service de niveau de support GPRS avec des taxes de niveau de session pour la session multimédia.

70. Unité de commande de services multimédias pour établir une session multimédia entre un terminal mobile et un hôte distant en utilisant une signalisation de session, dans laquelle la session multimédia inclut plusieurs flux de données de médias, le terminal mobile étant couplé à un réseau d'accès à commutation de paquets et à un système multimédia qui fournit des services de sessions multimédias, une unité de commande de services multimédias comprenant :
un circuit électronique configuré pour fournir au terminal mobile et à une entité de taxation un identificateur de taxation de service associé à la session multimédia,
dans laquelle l'entité de taxation utilise l'identificateur de taxation de service pour corréler des taxes de session associées à la session multimédia pour un service de réseau d'accès à commutation de paquets incluant une première opération effectuée dans le réseau d'accès à commutation de paquets associé à la session multimédia, et pour un service de système multimédia incluant une deuxième opération effectuée dans le système multimédia associé à la session multimédia.

71. Unité de commande de services multimédias selon la revendication 70, dans laquelle le service de réseau d'accès à commutation de paquets est un service de niveau de support et le service de système multimédia est un service de niveau de session.

72. Unité de commande de services multimédias selon la revendication 70, dans laquelle l'unité de commande de services multimédias est une unité de commande de services multimédias de desserte associée à un opérateur de réseau nominal du terminal mobile.

73. unité de commande de services multimédias selon la revendication 72, dans laquelle l'unité de commande de services multimédias de desserte utilise l'identificateur de taxation de service pour notifier à l'entité de taxation l'établissement et la terminaison de la session multimédia.

74. Unité de commande de services multimédias selon la revendication 70, dans laquelle l'unité de commande de services multimédias est une unité de commande de services multimédias mandataire associée à un réseau visité par le terminal mobile.

75. Unité de commande de services multimédias selon la revendication 74, dans laquelle l'unité de commande de services multimédias mandataire utilise l'identificateur de taxation de service dans des communications liées à des règles, avec une fonction de commande de règles dans le système multimédia et un portier dans le réseau d'accès à commutation de paquets.

76. Unité de commande de taxation convenant pour corréler des taxes de session dans une session multimédia entre un terminal mobile et un hôte distant, utilisant une signalisation de session, dans laquelle la session multimédia inclut plusieurs flux de données de médias, le terminal mobile étant couplé à un réseau d'accès à commutation de paquets et à un système multimédia qui fournit des services de sessions multimédias, une unité de commande de taxation comprenant un circuit électronique configuré pour accomplir les tâches suivantes :
recevoir un premier message de taxation avec un identificateur de taxation de service associé à la session multimédia, à partir du réseau d'accès à commutation de paquets,
recevoir un deuxième message de taxation avec l'identificateur de taxation de service, provenant du système multimédia ; et
utiliser l'identificateur de taxation de service pour corréler des taxes de session associées à la session multimédia pour un service de réseau d'accès à commutation de paquets, incluant une première opération effectuée dans le réseau d'accès à commutation de paquets associé à la session multimédia, et pour un service de système multimédia incluant une deuxième opération effectuée dans le système multimédia associé à la session multimédia.

77. Unité de commande de taxation selon la revendication 76, dans laquelle les premier et deuxième messages de taxation sont des enregistrements de données d'appel.

78. Unité de commande de taxation selon la revendication 76, dans laquelle le premier message de taxation est un message CAMEL et le deuxième message de taxation est un message DIAMETER.

79. Unité de commande de taxation selon la revendication 76, dans laquelle le circuit électronique est configuré pour générer une taxe de service combinée pour la session multimédia, qui combine en une seule taxe pour la session des taxes pour le service de réseau d'accès à commutation de paquets et le service de système multimédia.

80. Unité de commande de taxation selon la revendication 79, dans laquelle le circuit électronique est configuré pour fournir des taxes avec un rabais pour la session lorsque le terminal mobile donne son accord à des taxes combinées.

81. Unité de commande de taxation selon la revendication 79, dans laquelle le circuit électronique est configuré pour fournir des taxes avec rabais pour la session lorsque le terminal mobile donne son accord à un contrat de service associé à un réseau nominal du terminal mobile.

82. Unité de commande de taxation selon la revendication 79, dans laquelle le circuit électronique est configuré pour tenir compte d'un message de mise en oeuvre de règles locales basées sur des services, reçu du réseau d'accès à commutation de paquets, dans une taxe de session.

83. Unité de commande de taxation selon la revendication 79, dans laquelle l'identificateur de correspondant émetteur identifie la session multimédia et celui du réseau d'accès à commutation de paquets et de l'entité de système multimédia qui a envoyé le premier ou le deuxième message de taxation, respectivement.

84. Unité de commande de taxation selon la revendication 76, dans laquelle l'identificateur de taxation de service est utilisé pour corréler des taxes de session pour un modèle de taxation du type paiement par le correspondant A.

85. Unité de commande de taxation selon la revendication 76, dans laquelle un côté A de la session inclut le terminal mobile, le réseau d'accès à commutation de paquets, le système multimédia et l'unité de commande de taxation, et un côté B de la session inclut des entités similaires, dans laquelle un identificateur de taxation de service du côté A est utilisé pour corréler des taxes de session pour le côté A, et un identificateur de taxation de service du côté B est utilisé pour corréler des taxes de session pour le côté B, et dans laquelle l'unité de commande de taxation du côté A et l'unité de commande de taxation du côté B communiquent une information de taxation pour la session, pour générer une taxe de session.
